# EUROPEAN PATENT APPLICATION

(11) **EP 4 712 680 A1**
(43) Date of publication of application: **18.03.2026**
(21) Application number: 24806431.3
(22) Date of filing: 09.05.2024
(51) Int. Cl.: H04W 76/28

(54) **INFORMATION TRANSMISSION METHOD AND APPARATUS, TERMINAL, AND NETWORK DEVICE**

(30) Priority: 12.05.2023 CN 202310536848
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); SU, Yuwan, Beijing 100085 (CN); YANG, Meiying, Beijing 100085 (CN)
(74) Representative: Studio Torta S.p.A.
(86) International application number: PCT/CN2024/091813
(87) International publication number: WO 2024/235079

(57) **Abstract**

The present disclosure provides an information transmission method and device, UE and a network device, and relates to the technical field of communications. The method is executed by the UE and includes: receiving first indication information. The first indication information is used to indicate a cell target transmission of a first target cell. The cell target transmission includes at least one of the following: cell DRX and cell DTX.

## Description

The present application is filed based on and claims the priority of Chinese Application No. 202310536848.5 filed on May 12, 2023, entitled "information transmission method, device, user equipment and network device", the disclosure of which are incorporated in their entireties by reference herein.

### TECHNICAL FIELD

The present disclosure relates to the field of communication technologies, and in particular, to an information transmission method, device, user equipment and network device.

### BACKGROUND

In the scenario of carrier aggregation (CA), a primary cell (PCell) is responsible for managing a secondary cell (SCell), including operations like activation, deactivation, and dormancy indication. In the CA scenario, how a base station configures a cell discontinuous transmission (DTX) and/or cell discontinuous reception (DRX) transmission is an urgent problem to be solved.

### SUMMARY

Embodiments of the present disclosure provide an information transmission method, device, UE and network device, which can achieve configuration of cell DTX and/or cell DRX.

In order to solve the above technical problem, one embodiment of the present disclosure provides an information transmission method, performed by a user equipment (UE), including:
receiving first indication information; wherein the first indication information is used to indicate a cell target transmission of a first target cell;
wherein the cell target transmission includes at least one of the following: cell DRX and cell DTX.

In some embodiments, the first indication information includes at least one of the following:
relevant information for activating and/or deactivating the cell target transmission of the first target cell;
transmission related information of the cell target transmission of the first target cell.

In some embodiments, the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

In some embodiments, the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

In some embodiments, the receiving first indication information, includes:
receiving first signaling; wherein the first signaling carries the first indication information;
obtaining the first indication information in the first signaling;
wherein the first signaling includes at least one of the following:
   layer 1 signaling, MAC layer signaling, and RRC layer signaling.

In some embodiments, the first signaling belongs to at least one of the following:
group common signaling, UE-specific signaling.

In some embodiments, a scrambling code for CRC of the layer 1 signaling of the group common signaling includes at least one of the following:
system information radio network temporary identifier (SI-RNTI), paging radio network temporary identifier (P-RNTI), paging early indication RNTI (PEI-RNTI), power saving radio network temporary identifier (PS-RNTI), slot format indication radio network temporary identifier (SFI-RNTI), cell radio network temporary identifier (C-RNTI), modulation and coding scheme C-RNTI (MCS-C-RNTI), configured scheduling radio network temporary identifier (CS-RNTI).

In some embodiments, a scrambling code for CRC of the layer 1 signaling of the UE-specific signaling includes at least one of the following:
cell radio network temporary identifier (C-RNTI), modulation and coding scheme C-RNTI (MCS-C-RNTI), configured scheduling radio network temporary identifier (CS-RNTI).

In some embodiments, the layer 1 signaling includes at least one of the following:
a layer 1 signaling dedicated for network energy-saving;
a layer 1 signaling dedicated for the cell target transmission.

In some embodiments, a scrambling code for cyclic redundancy check (CRC) of the layer 1 signaling includes at least one of the following:
a radio network temporary identifier (RNTI) dedicated for the cell target transmission;
RNTI dedicated for network energy saving.

In some embodiments, the first signaling includes a first indication information field, and the first indication information field is used to carry the first indication information;
the method further includes:
transmitting, through a first mode, a position of the first indication information field in the first signaling, to the UE;
wherein the first mode includes at least one of the following:
   configuration in high layer signaling;
   indication in broadcast signaling;
   indication in downlink signaling.

In some embodiments, when the first signaling belongs to group common signaling, the first indication information field includes at least one of the following: a common information field of at least one UE and a UE-specific information field.

In some embodiments, the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

In some embodiments, the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

In some embodiments, the UE-specific information field includes at least one of the following: a common information field of at least one cell and a cell-specific information field.

In some embodiments, when the first signaling belongs to UE-specific signaling, the first indication information field includes at least one of the following: a common information field of at least one cell and a cell-specific information field.

In some embodiments, the common information field of the at least one cell carries at least one of the following:
available time information of the cell target transmission;
starting time indication information of an active period of the cell target transmission;
end time indication information of an active period of the cell target transmission;
start time indication information of an inactive period of the cell target transmission;
end time indication information of an inactive period of the cell target transmission;
indication information related to configuration of the cell target transmission;
update information related to configuration of the cell target transmission;
information related to feedback information of the first indication information;
parameter information corresponding to configuration of the cell target transmission;
usage indication information of a cell-specific information field.

In some embodiments, the cell-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the target transmission of the cell;
indication information related to configuration of the cell target transmission;
update information related to configuration of the cell target transmission;
information related to feedback information of the first indication information;
parameter information corresponding to configuration of the cell target transmission.

In some embodiments, the parameter information includes at least one of the following:
transmission period, duration of an active period, duration of an inactive period, starting time of the active period, end time of the active period, starting time of the inactive period, end time of the inactive period.

In some embodiments, the first indication information field satisfies at least one of the following:
being a newly added information field in the first signaling;
being a redefinition of a target information field in the first signaling.

In some embodiments, when the first indication information field is a redefinition of the target information field in the first signaling, the first signaling includes at least one of the following:
downlink control information DCI format 2_6, DCI format 0_0, DCI format 0_1, DCI format 0_2, DCI format 1_0, DCI format 1_1, DCI format 1_2.

In some embodiments, the receiving the first signaling, includes:
obtaining a first resource through a second mode;
receiving, on the first resource, the first signaling;
wherein the second mode includes at least one of the following:
   pre-configuration, protocol agreement, and indication in downlink signaling.

In some embodiments, when the second mode includes pre-configuration, the first resource is preconfigured on a first receiving cell;
the first receiving cell includes at least one of the following:
a primary cell;
a secondary cell.

In some embodiments, the first receiving cell is a cell belonging to a cell group configured by the network device.

In some embodiments, the cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, when the first resource is pre-configured based on a BWP, the BWP for transmitting the first indication information includes: at least one BWP supported by a cell.

In some embodiments, the at least one BWP includes at least one of the following:
BWP dedicated to a target transmission;
BWP dedicated to network energy saving;
non-initial BWP;
non-dormant BWP;
other BWPs in the configured cell with exception of any of the following: the BWP dedicated to target transmission, the BWP dedicated to network energy saving, the non-initial BWP and the non-dormant BWP.

In some embodiments, when the second mode includes a protocol agreement, the first resource satisfies at least one of the following: located within an active period of C-DRX of the UE; located outside an active period of the C-DRX of the UE; located within an active period of the cell target transmission; located outside an active period of the cell target transmission.

In some embodiments, when the second mode includes pre-configuration, the first resource satisfies at least one of the following:
having an association relationship with a target reference signal, having an association relationship with a target data transmission channel, and having an association relationship with a target control channel.

In some embodiments, when the second mode includes indication in downlink signaling, the downlink signaling is used to indicate one or more of a plurality of resource parameter configurations configured by the network device.

In some embodiments, the first target cell includes at least one of the following:
a primary Cell;
at least one target secondary cell;
at least one cell in at least one target cell group.

In some embodiments, the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, the method further includes:
obtaining a first target cell in a third mode;
wherein the third mode includes at least one of the following:
   agreement;
   pre-configuration;
   indicating through first indication information.

In some embodiments, the method further includes:
transmitting feedback information of the first indication information to the network device.

In some embodiments, the feedback information includes at least one of the following:
hybrid automatic repeat request acknowledgement (HARQ-ACK) feedback information;
MAC layer reception confirmation information.

In some embodiments, the transmitting the feedback information of the first indication information to the network device includes:
obtaining a second resource through a fourth mode;
transmitting feedback information to the network device through the second resource;
wherein the fourth mode includes at least one of the following:
   configuration in high layer signaling, protocol agreement, and indication in downlink signaling.

In some embodiments, the method further includes:
performing a first operation based on the first indication information;
wherein the first operation includes at least one of the following:
   activating a cell target transmission of a first target cell at a target time;
   deactivating a cell target transmission of a first target cell at a target time;
   adjusting a cell target transmission of a first target cell at the target time;
   starting or ending an active period of a cell target transmission of a first target cell at a target time;
   starting or ending an inactive period of a cell target transmission of a first target cell at a target time.

In some embodiments, the target time is determined by at least one of the following:
time of receiving the first indication information;
reception time of the first indication information plus a preconfigured offset value;
reception time of the first indication information and subcarrier spacing of the first target cell;
transmission time of feedback information corresponding to the first indication information;
transmission time of feedback information corresponding to the first indication information plus a preconfigured offset value;
transmission time of feedback information corresponding to the first indication information and subcarrier spacing of the first target cell.

One embodiment of the present disclosure further provides an information transmission method, performed by a network device, including:
transmitting first indication information; wherein the first indication information is used to indicate cell target transmission of a first target cell;
wherein the cell target transmission includes at least one of the following: cell discontinuous reception DRX and cell discontinuous transmission DTX.

In some embodiments, the first indication information includes at least one of the following:
relevant information for activating and/or deactivating the cell target transmission of the first target cell;
transmission related information of the cell target transmission of the first target cell.

In some embodiments, the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

In some embodiments, the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

In some embodiments, the transmitting first indication information includes:
transmitting a first signaling to a user equipment (UE); wherein the first signaling carries the first indication information;
wherein the first signaling includes at least one of the following:
   layer 1 signaling, media access control MAC layer signaling, and radio resource control RRC layer signaling.

In some embodiments, the first signaling belongs to at least one of the following:
group common signaling, UE-specific signaling.

In some embodiments, a scrambling code for CRC of the layer 1 signaling of the group common signaling includes at least one of the following:
system information radio network temporary identifier (SI-RNTI), paging radio network temporary identifier (P-RNTI), paging early indication RNTI (PEI-RNTI), power saving radio network temporary identifier (PS-RNTI), slot format indication radio network temporary identifier (SFI-RNTI), cell radio network temporary identifier (C-RNTI), modulation and coding scheme C-RNTI (MCS-C-RNTI), configured scheduling radio network temporary identifier (CS-RNTI).

In some embodiments, a scrambling code for CRC of the layer 1 signaling of the UE-specific signaling includes at least one of the following:
cell radio network temporary identifier (C-RNTI), modulation and coding scheme C-RNTI (MCS-C-RNTI), configured scheduling radio network temporary identifier (CS-RNTI).

In some embodiments, the layer 1 signaling includes at least one of the following:
a layer 1 signaling dedicated for network energy-saving;
a layer 1 signaling dedicated for the cell target transmission.

In some embodiments, a scrambling code for cyclic redundancy check (CRC) of the layer 1 signaling includes at least one of the following:
a radio network temporary identifier (RNTI) dedicated for the cell target transmission;
RNTI dedicated for network energy saving.

In some embodiments, the first signaling includes a first indication information field, and the first indication information field is used to carry the first indication information;
the method further includes:
transmitting, through a first mode, a position of the first indication information field in the first signaling, to the UE;
wherein the first mode includes at least one of the following:
   configuration in high layer signaling;
   indication in broadcast signaling;
   indication in downlink signaling.

In some embodiments, when the first signaling belongs to group common signaling, the first indication information field includes at least one of the following: a common information field of at least one UE and a UE-specific information field.

In some embodiments, the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

In some embodiments, the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

In some embodiments, the UE-specific information field includes at least one of the following: a common information field of at least one cell and a cell-specific information field.

In some embodiments, when the first signaling belongs to UE-specific signaling, the first indication information field includes at least one of the following: a common information field of at least one cell and a cell-specific information field.

In some embodiments, the common information field of the at least one cell carries at least one of the following:
available time information of the cell target transmission;
starting time indication information of an active period of the cell target transmission;
end time indication information of an active period of the cell target transmission;
start time indication information of an inactive period of the cell target transmission;
end time indication information of an inactive period of the cell target transmission;
indication information related to configuration of the cell target transmission;
update information related to configuration of the cell target transmission;
information related to feedback information of the first indication information;
parameter information corresponding to configuration of the cell target transmission;
usage indication information of a cell-specific information field.

In some embodiments, the cell-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the target transmission of the cell;
indication information related to configuration of the cell target transmission;
update information related to configuration of the cell target transmission;
information related to feedback information of the first indication information;
parameter information corresponding to configuration of the cell target transmission.

In some embodiments, the parameter information includes at least one of the following:
transmission period, duration of an active period, duration of an inactive period, starting time of the active period, end time of the active period, starting time of the inactive period, end time of the inactive period.

In some embodiments, the first indication information field satisfies at least one of the following:
being a newly added information field in the first signaling;
being a redefinition of a target information field in the first signaling.

In some embodiments, when the first indication information field is a redefinition of the target information field in the first signaling, the first signaling includes at least one of the following:
downlink control information DCI format 2_6, DCI format 0_0, DCI format 0_1, DCI format 0_2, DCI format 1_0, DCI format 1_1, DCI format 1_2.

In some embodiments, the method further includes:
indicating, through a fifth mode, to the UE, a first resource for transmitting the first signaling;
wherein the fifth mode includes at least one of the following:
   pre-configuration, indication in downlink signaling.

In some embodiments, when the fifth mode includes pre-configuration, the first resource is pre-configured on a first receiving cell;
where the first receiving cell includes at least one of the following:
a primary cell;
a secondary cell.

In some embodiments, the first receiving cell belongs to a cell in a cell group configured by the network device.

In some embodiments, the cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, when the first resource is pre-configured based on a BWP, the BWP for transmitting the first indication information includes: at least one BWP supported by a cell.

In some embodiments, the at least one BWP includes at least one of the following:
BWP dedicated to target transmission;
BWP dedicated to network energy saving;
   non-initial BWP;
   non-dormant BWP;
   other BWPs in the configured cell with exception of any of the following: the BWP dedicated to target transmission, the BWP dedicated to network energy saving, the non-initial BWP and the non-dormant BWP.

In some embodiments, when the fifth mode includes pre-configuration, the first resource satisfies at least one of the following:
having an association relationship with a target reference signal; having an association relationship with a target data transmission channel; having an association relationship with a target control channel.

In some embodiments, when the fifth mode includes indication in downlink signaling, the downlink signaling is used to indicate one or more of a plurality of resource parameter configurations configured by the network device.

In some embodiments, the first target cell includes at least one of the following:
a primary Cell;
at least one target secondary cell;
at least one cell in at least one target cell group.

In some embodiments, the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, the method further includes:
transmitting the first target cell to the UE through a sixth mode;
wherein the sixth mode includes at least one of the following:
   pre-configuration;
   indicating through first indication information.

In some embodiments, the method further includes:
receiving feedback information of the first indication information transmitted by the UE.

In some embodiments, the feedback information includes at least one of the following:
hybrid automatic repeat request acknowledgement (HARQ-ACK) feedback information;
MAC layer reception confirmation information.

In some embodiments, the method further includes at least one of the following:
indicating, through configuration in high layer signaling, to the UE, a second resource for transmitting feedback information;
indicating, through indication in downlink signaling, to the UE, a second resource for feedback information.

One embodiment of the present disclosure further provides a user equipment (UE), including: a memory, a transceiver, and a processor;
wherein the memory is used to store a computer program; the transceiver is used to transmit and receive data under the control of the processor; and the processor is used to read the computer program in the memory and perform the following operations:
receiving first indication information through the transceiver; wherein the first indication information is used to indicate a cell target transmission of a first target cell;
wherein the cell target transmission includes at least one of the following: cell DRX and cell DTX.

In some embodiments, the processor is used to read the computer program in the memory and perform the following operations:
receiving first signaling; wherein the first signaling carries the first indication information;
obtaining the first indication information in the first signaling;
wherein the first signaling includes at least one of the following:
   layer 1 signaling, MAC layer signaling, and RRC layer signaling.

In some embodiments, the first indication information includes at least one of the following:
relevant information for activating and/or deactivating the cell target transmission of the first target cell;
transmission related information of the cell target transmission of the first target cell.

In some embodiments, the first signaling includes a first indication information field, and the first indication information field is used to carry the first indication information;
the processor is used to read the computer program in the memory and perform the following operations:
obtaining, through a first mode, a position of the first indication information field in the first signaling, to the UE;
wherein the first mode includes at least one of the following:
   configuration in high layer signaling;
   indication in broadcast signaling;
   indication in downlink signaling.

In some embodiments, the processor is used to read the computer program in the memory and perform the following operations:
performing a first operation based on the first indication information;
wherein the first operation includes at least one of the following:
   activating a cell target transmission of a first target cell at a target time;
   deactivating a cell target transmission of a first target cell at a target time;
   adjusting a cell target transmission of a first target cell at the target time;
   starting or ending an active period of a cell target transmission of a first target cell at a target time;
   starting or ending an inactive period of a cell target transmission of a first target cell at a target time.

One embodiment of the present disclosure further provides a network device, including: a memory, a transceiver, and a processor;
wherein the memory is used to store a computer program; the transceiver is used to transmit and receive data under the control of the processor; and the processor is used to read the computer program in the memory and perform the following operations:
transmitting first indication information through the transceiver; wherein the first indication information is used to indicate cell target transmission of a first target cell;
wherein the cell target transmission includes at least one of the following: cell discontinuous reception DRX and cell discontinuous transmission DTX.

One embodiment of the present disclosure further provides an information transmission device, applied to user equipment (UE), including:
a first receiving unit used to receive first indication information; wherein the first indication information is used to indicate a cell target transmission of a first target cell;
wherein the cell target transmission includes at least one of the following: cell DRX and cell DTX.

One embodiment of the present disclosure further provides an information transmission device, applied to a network device, including:
a first transmission unit used to transmit first indication information; wherein the first indication information is used to indicate cell target transmission of a first target cell;
wherein the cell target transmission includes at least one of the following: cell discontinuous reception DRX and cell discontinuous transmission DTX.

One embodiment of the present disclosure further provides a processor-readable storage medium, including a computer program stored thereon; wherein the computer program is used to cause a processor to execute the above method.

The beneficial effects of the present disclosure are as follows.
Through the above solution, by receiving the cell DRX and/or cell DTX for the first target cell transmitted by the network device, the cell DRX and/or cell DTX for a specific cell can be configured, thereby achieving energy saving on the user equipment and the network side.

### BRIEF DESCRIPTION OF THE DRAWINGS

In order to provide a clearer explanation of technical solutions described in the embodiments of the present disclosure or the related art, accompanying drawings required for describing the embodiments or the related art will be briefly introduced hereinafter. It is evident that the drawings in the following description represent only some embodiments recorded herein, and those of ordinary skill in the art may obtain other drawings based on these without creative effort.
FIG. 1 is a schematic diagram showing a DRX mechanism;
FIG. 2 is a schematic diagram of a network system applicable to an embodiment of the present disclosure;
FIG. 3 is a first flow chart of an information transmission method according to an embodiment of the present disclosure;
FIG. 4 is a first schematic diagram showing a common Cell DTX/DRX configuration for PCell and SCell;
FIG. 5 is a second schematic diagram showing a common Cell DTX/DRX configuration for PCell and SCell;
FIG. 6 is a third schematic diagram showing a common Cell DTX/DRX configuration for PCell and SCell;
FIG. 7 is a schematic diagram showing a common Cell DTX/DRX configuration for cells in the same DRX group;
FIG. 8 is a second flow chart of an information transmission method according to an embodiment of the present disclosure;
FIG. 9 is a schematic diagram showing units of an information transmission device according to an embodiment of the present disclosure;
FIG. 10 is a schematic diagram of a user equipment according to an embodiment of the present disclosure;
FIG. 11 is a schematic diagram showing units of an information transmission device according to an embodiment of the present disclosure; and
FIG. 12 is a schematic diagram of a network device according to an embodiment of the present disclosure.

### DETAILED DESCRIPTION

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship. In the embodiment of the present application, the term "plurality" refers to two or more than two, and other quantifiers are similar.

In the embodiments of the present disclosure, terms such as "exemplary" or "for example" are used to illustrate an example, provide an instance, or give an explanation. Any embodiment or design solution described as "exemplary" or "for example" shall not be interpreted as being superior to or more advantageous than other embodiments or design solutions. Rather, the use of terms such as "exemplary" or "for example" is intended to present the related concepts in a concrete manner.

The relevant concepts mentioned in the present disclosure are briefly described hereinafter.

### 1. Discontinuous reception (DRX) transmission

When a user equipment (UE) is configured with only one set of DRX parameters, for one DRX cycle, the user equipment discontinuously monitors physical downlink control channel (PDCCH) of all serving cells. The UE monitors the PDCCH only during a DRX on duration or when an inactivity timer has not expired.

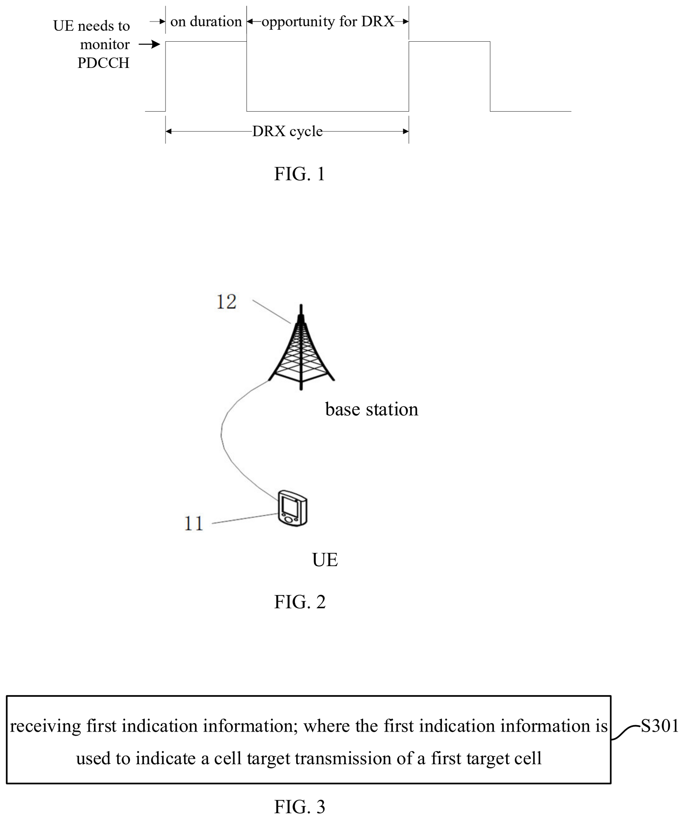

The DRX mechanism is shown in FIG. 1. In the DRX cycle, the UE only monitors PDCCH in the on duration time. During an opportunity for DRX (i.e., DRX off) time, the UE does not receive any PDCCH except for scheduling broadcast signaling to reduce power consumption, i.e., enters a sleep mode.

For a user equipment in a radio resource control (RRC) connected mode and configured with DRX transmission mechanism, the UE only discontinuously monitors PDCCH scrambled by the following radio network temporary identifiers (RNTIs): cell RNTI (C-RNTI), cancellation indication RNTI (CI-RNTI), configured scheduling RNTI (CS-RNTI), interruption RNTI (INT-RNTI), slot format indication RNTI (SFI-RNTI), semi-persistent CSI RNTI (SP-CSI-RNTI), transmit power control physical uplink control channel RNTI (TPC-PUCCH-RNTI), TPC physical uplink shared channel RNTI (TPC-PUSCH-RNTI), TPC sounding reference signal RNTI (TPC-SRS-RNTI), and availability indication (AI-RNTI). Additionally, PDCCH scrambled by the following RNTIs is not subject to DRX restrictions: system information RNTI (SI-RNTI), MBS control channel RNTI (MCCH-RNTI), Group RNTI (G-RNTI), random access RNTI (RA-RNTI), MsgB-RNTI, temporary cell RNTI (TC-RNTI), paging RNTI (P-RNTI), power saving RNTI (PS-RNTI), sidelink RNTI (SL-RNTI), sidelink configured scheduling RNTI (SL-CS-RNTI), or sidelink semi-persistent scheduling V-RNTI (SL SPS V-RNTI).

The DRX on duration includes any of the following situations:
a duration during which a DRX-on duration timer (drx-onDurationTimer) or a DRX inactivity timer (drx-InactivityTimer) runs;
a duration during which a downlink retransmission timer (drx-RetransmissionTimerDL) or an uplink retransmission timer (drx-RetransmissionTimerUL) runs;
a duration during which a random access contention resolution timer (ra-ContentionResolutionTimer) or a message-B response window (msgB-ResponseWindow) runs;
a duration during which a scheduling request is transmitted on PUCCH and is in a pending state;
during a contention-based random access procedure, after successfully receiving a random access response to a random access preamble not selected by a media access control (MAC) entity from contention-based random access preambles, a PDCCH indicating a new transmission addressed to a C-RNTI of the MAC entity has not been received.

During the DRX inactive period, the UE needs to perform the following operations: SPS physical downlink shared channel (PDSCH) transmission, periodic channel state information (CSI) measurement, system information reception, power-saving signal reception, tracking reference signal (TRS) reception, radio resource management (RRM) measurement, and permanent equipment identifier (PEI) reception.

A base station can configure two DRX groups for a UE serving cell. In addition to having different drx-onDurationTimer and drx-InactivityTimer, the other DRX parameters of the two DRX groups are consistent, including: drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL and drx-HARQ-RTT-TimerUL. In other words, the two DRX groups have the same DRX cycle but can have different on-durations.

When the UE receives a DRX command (E.G., a MAC control element (CE) of a DRX command (DRX Command MAC CE) or a MAC CE of a long DRX command (Long DRX Command MAC CE)), the timers (drx-onDurationTimer and drx-InactivityTimer) of each DRX group are stopped.

When a secondary DRX group is configured, some SCells are configured in the secondary DRX group; otherwise, both the PCell and the SCell are in one DRX group.

### 2. SCell activation/deactivation

There are five primary ways for SCell activation/deactivation:
reception of an SCell activation/deactivation MAC CE;
reception of an enhanced SCell activation/deactivation MAC CE;
expiry of a sCellDeactivationTimer configured for the SCell;
sCellState configured in an RRC signaling being set to active;
reception of scg-State being set to deactivated.

The embodiments of the present disclosure will be described hereafter with reference to the accompanying drawings. The information transmission method, device, user equipment and network device provided in the embodiments of the present disclosure can be applied to a wireless communication system. The wireless communication system may be a system employing 5th generation (5G) mobile communication technology (hereinafter referred to as a 5G system). Those skilled in the art will appreciate that the 5G NR system is merely an example and is not intended to be limiting.

Referring to FIG. 2, FIG. 2 is a schematic diagram of a network system applicable to an embodiment of the present disclosure. As shown in FIG. 2, the network system includes a user terminal 11 and a base station 12. The user terminal 11 may be a user equipment (UE), for example, a mobile phone, a tablet personal computer, a laptop computer, a personal digital assistant (PDA), a mobile internet device (MID) or a wearable device and other terminal side devices. It is to be noted that the specific type of the user terminal 11 is not limited in the embodiment of the present disclosure. The above base station 12 may be a base station of 5G and later versions (for example, gNB, 5G NR NB), or a base station in other communication systems, or referred to as a node B. It is to be noted that in the embodiment of the present disclosure, only a 5G base station is taken as an example, but the specific type of the base station 12 is not limited.

The embodiments of the present disclosure provide an information transmission method, device, user equipment and network device, which can achieve the purpose of cell DTX and/or cell DRX configuration.

The method and the device are based on the same application concept. Since the principles of solving the problems by the method and the device are similar, the implementation of the device and the method can refer to each other, and the repeated parts will not be repeated.

As shown in FIG. 3, one embodiment of the present disclosure provides an information transmission method, which is executed by a user equipment (UE) and includes:
Step S301: receiving first indication information; where the first indication information is used to indicate a cell target transmission of a first target cell.

The cell target transmission includes at least one of the following: cell DRX and cell DTX.

It is to be noted that by receiving the cell DRX and/or cell DTX for the first target cell transmitted by the network device, the cell DRX and/or cell DTX for a specific cell can be configured, thereby achieving energy saving on the user equipment and the network side.

In some embodiments, the first indication information includes at least one of A11 and A12:

A11, relevant information for activating and/or deactivating the cell target transmission of the first target cell.

In some embodiments, the relevant information may be used to indicate whether the cell target transmission of the first target cell is activated and/or deactivated; the relevant information may also be used to indicate when the cell target transmission of the first target cell is activated and/or deactivated.

In some embodiments, the relevant information for activating and/or deactivating the cell target transmission of the first target cell includes at least one item of A101 to A111:
A101, indication information for activating the cell target transmission.
A102, indication information for deactivating the cell target transmission.

For example, the indication information is indicated by 1 bit. When the bit value is 0, it indicates activation of the cell target transmission, and when the bit value is 1, it indicates deactivation of the cell target transmission; or, when the bit value is 1, it indicates activation of the cell target transmission, and when the bit value is 0, it indicates deactivation of the cell target transmission.

A103, available time information of the cell target transmission;
It is to be noted that the available time information indicates when the cell target transmission takes effect. For example, the available time information can be a time offset, or a boundary starting point of a specific slot or a specific radio frame, or a boundary end point of a specific slot or a specific radio frame. For example, the available time information can also be a specific duration (such as the number of slots, the number of symbols, the number of milliseconds, etc.).

A104, cell information corresponding to activated cell target transmission.

It is to be noted that the cell information may be indicated by a cell identifier (e.g., a cell ID, a cell index, etc.) or by a cell group identifier (e.g., a cell group ID, a cell group index, etc.).

A105, carrier information corresponding to activated cell target transmission.

It is to be noted that the carrier information can be understood as carrier information corresponding to the first target cell, that is, through the carrier information, the user equipment can determine for which specific cell or which cell group the cell target transmission is to be activated. This carrier information can be a carrier identifier (e.g., a carrier ID, carrier index, etc.).

A106, cell information corresponding to deactivated cell target transmission.

A107, carrier information corresponding to deactivated cell target transmission.

A108, starting time indication information of an active period of the cell target transmission.

It is to be noted that the starting time indication information may be a specific time point or a time offset.

A109, end time indication information of an active period of the cell target transmission.

It is to be noted that the end time indication information may be a specific time point or a time offset.

A110, starting time indication information of an active period of the cell target transmission.

A111, end time indication information of an active period of the cell target transmission.

A12, transmission related information of the cell target transmission of the first target cell.

It is to be noted that the transmission related information can be used to indicate at least one parameter indication in transmission configuration of the cell target transmission.

In some embodiments, in one implementation, the transmission related information of the cell target transmission of the first target cell includes at least one item of A121 to A124.

A121, indication information related to configuration of the cell target transmission.

For example, the indication information is used to indicate a configuration set (i.e., a set of parameters) used for the cell target transmission; it can be understood that the indication information is used to indicate that a specific set of parameters in at least one set of parameters is used for the cell target transmission.

A122, update information related to configuration of the cell target transmission.

For example, the update information is used to indicate which set of parameters the cell target transmission is updated to; it can be understood that the update information is used to indicate which set of parameters among the at least one set of parameters the cell target transmission is updated to.

For another example, the update information is used to indicate that at least one parameter in the transmission configuration of the cell target transmission is updated to a target parameter, where the target parameter may be a specific indication by the base station, or configured through high layer signaling, or an index corresponding to a specific parameter among multiple parameter values.

A123, information related to feedback information of the first indication information.

For example, the information related to the feedback information of the first indication information may include at least one of the following: an indication of whether to transmit feedback information, an indication of timing of transmitting feedback information, an indication of resources used for transmitting feedback information, and the like.

A124, parameter information corresponding to configuration of the cell target transmission.

In some embodiments, in one implementation, the parameter information includes at least one of the following:
transmission period, duration of an active period, duration of an inactive period, starting time of the active period, end time of the active period, starting time of the inactive period, end time of the inactive period.

In some embodiments, a specific implementation of receiving the first indication information, includes:
receiving a first signaling; where the first signaling carries the first indication information;
obtaining the first indication information in the first signaling;
where the first signaling includes at least one of the following:
   layer 1 signaling, MAC layer signaling, and RRC layer signaling.

In some embodiments, the first signaling belongs to at least one of the following:
group common signaling, UE-specific signaling.

It is to be noted that transmission of the first indication information through the group common signaling can save the signaling overhead on the network device side. The transmission of the first indication information through UE-specific signaling can realize personalized indication for different UEs, and can dynamically adjust a state of the UE's cell target transmission according to service transmission requirements, thereby improving the flexibility of the indication.

For example, when the first signaling is layer 1 signaling, the layer 1 signaling can be either group-common layer 1 signaling or UE-specific layer 1 signaling. For example, when the first signaling is an MAC layer signaling, the MAC layer signaling can be either group-common MAC layer signaling or UE-specific MAC layer signaling. Similarly, when the first signaling is an RRC layer signaling, the RRC layer signaling can be either group-common RRC layer signaling or UE-specific RRC layer signaling.

In the case where the first signaling is layer 1 signaling, there is at least one of the following implementations.

In some embodiments, the layer 1 signaling includes at least one of the following:
a layer 1 signaling dedicated for network energy-saving, that is, in this case, the first indication information is transmitted through the layer 1 signaling corresponding to the network energy-saving;
a layer 1 signaling dedicated for the cell target transmission, that is, in this case, the first indication information is transmitted through the layer 1 signaling corresponding to the cell target transmission.

In some embodiments, a scrambling code for cyclic redundancy check (CRC) of the layer 1 signaling includes at least one of the following:
a radio network temporary identifier (RNTI) dedicated for the cell target transmission;
RNTI dedicated for network energy saving.

In some embodiments, a scrambling code for cyclic redundancy check (CRC) of the layer 1 signaling of the group common signaling includes at least one of the following:
system information radio network temporary identifier (SI-RNTI), paging radio network temporary identifier (P-RNTI), paging early indication RNTI (PEI-RNTI), power saving radio network temporary identifier (PS-RNTI), slot format indication radio network temporary identifier (SFI-RNTI), cell radio network temporary identifier (C-RNTI), modulation and coding scheme C-RNTI (MCS-C-RNTI), configured scheduling radio network temporary identifier (CS-RNTI), multicast broadcast service control channel radio network temporary identifier (MCCH-RNTI), group radio network temporary identifier (G-RNTI), group configured scheduling radio network temporary identifier (G-CS-RNTI), radio access radio network temporary identifier (RA-RNTI), random access message B radio network temporary identifier (MsgB-RNTI), temporary cell radio network temporary identifier (TC-RNTI), interruption radio network temporary identifier (INT-RNTI), transmission power control physical uplink control channel radio network temporary identifier (TPC-PUCCH-RNTI), transmission power control physical uplink shared channel radio network temporary identifier (TPC-PUSCH-RNTI), transmission power control sounding reference symbol radio network temporary identifier (TPC-SRS-RNTI), cancellation indication radio network temporary identifier (CI-RNTI) and availability indication radio network temporary identifier (AI-RNTI).

In some embodiments, the scrambling code for the CRC of the layer 1 signaling of the group common signaling includes at least one of the following:
SI-RNTI, P-RNTI, PEI-RNTI, PS-RNTI, SFI-RNTI, C-RNTI, MCS-C-RNTI, CS-RNTI.

In some embodiments, the scrambling code for the CRC of the layer 1 signaling of the UE-specific signaling includes at least one of the following:
cell radio network temporary identifier (C-RNTI), modulation and coding scheme C-RNTI (MCS-C-RNTI), configured scheduling radio network temporary identifier (CS-RNTI), semi-persistent channel state information radio network temporary identifier (SP-CSI-RNTI), and sidelink (SL) related RNTI.

In some embodiments, the scrambling code for the CRC of the layer 1 signaling of the UE-specific signaling includes at least one of the following:
C-RNTI, MCS-C-RNTI, CS-RNTI.

It is to be noted that, a specific indication field is usually set in the first signaling to carry the first indication information; in some embodiments, the first signaling includes a first indication information field, and the first indication information field is used to carry the first indication information.

In some embodiments, the method further includes:
obtaining, through a first mode, a position of the first indication information field in the first signaling;
where the first mode includes at least one of the following:
   configuration in high layer signaling;
   indication in broadcast signaling;
   indication in downlink signaling.

In some embodiments, when the first signaling belongs to group common signaling, the first indication information field includes at least one of the following: a common information field of at least one UE and a UE-specific information field.

It is to be noted that the common information field can be used to carry information applicable to at least one UE; and the UE-specific information field is used to carry information for a specific UE.

In some embodiments, the common information field of the at least one UE carries at least one of the following:
B11, indication information for activating the cell target transmission;
B12, indication information for deactivating the cell target transmission;
B13, available time information of the cell target transmission;
B14, starting time indication information of an active period of the cell target transmission;
B15, end time indication information of an active period of the cell target transmission;
B16, starting time indication information of an inactive period of the cell target transmission;
B17, end time indication information of an inactive period of the cell target transmission;
B18, usage indication information of a UE-specific information field.

It is to be noted that, when there are both a common information field and a UE-specific information field of at least one UE in the first indication information field, the common information field of at least one UE may include usage indication information of a UE-specific information field. In some embodiments, the usage indication information is used to indicate specific function of information carried in the UE-specific information field, and may indicate one or more of the relevant information for activating and/or deactivating the cell target transmission of the first target cell and the transmission related information of the cell target transmission of the first target cell. For example, the usage indication information is used to indicate at least one of: indication information for activating the cell target transmission, indication information for deactivating the cell target transmission, cell information corresponding to an activated cell target transmission, and cell information corresponding to a deactivated cell target transmission.

In some embodiments, the UE-specific information field carries at least one of the following:
B21, indication information for activating the cell target transmission;
B22, indication information for deactivating the cell target transmission;
B23, cell information corresponding to an activated cell target transmission;
B24, cell information corresponding to a deactivated cell target transmission;

For example, the first indication information field includes both a common information field and a UE-specific information field of at least one UE, the common information field of at least one UE is used to carry the indication information for activating the cell target transmission, and the UE-specific information field is used to carry the cell information corresponding to the activated cell target transmission. For example, the first indication information field contains only a UE-specific information field, and the UE-specific information field is used to carry the indication information for activating the cell target transmission and the cell information corresponding to the activated cell target transmission. It is to be noted that the content contained in the above first indication information field is only an example and does not constitute a limitation to the present disclosure.
B25, available time information of the cell target transmission;
B26, indication information related to configuration of the cell target transmission;
B27, update information related to configuration of the cell target transmission;
B28, information related to feedback information of the first indication information;
B29, parameter information corresponding to configuration of the cell target transmission.

In some embodiments, the UE-specific information field includes at least one of the following: a common information field of at least one cell and a cell-specific information field.

It is to be noted that the common information field of at least one cell can be used to carry information applicable to at least one cell of the UE; and the cell-specific information field is used to carry information applicable to a specific cell.

In some embodiments, the common information field of the at least one cell carries at least one of the following:
B301, available time information of the cell target transmission;
B302, starting time indication information of an active period of the cell target transmission;
B303, end time indication information of an active period of the cell target transmission;
B304, start time indication information of an inactive period of the cell target transmission;
B305, end time indication information of an inactive period of the cell target transmission;
B306, indication information related to configuration of the cell target transmission;
B307, update information related to configuration of the cell target transmission;
B308, information related to feedback information of the first indication information;
B309, parameter information corresponding to configuration of the cell target transmission;
B310, usage indication information of a cell-specific information field.

It is to be noted that, when there are both a common information field and a cell-specific information field of at least one cell in the UE-specific information field, the common information field of at least one cell may include usage indication information of the cell-specific information field; in some embodiments, the usage indication information is used to indicate the specific function of information carried in the cell-specific information field. For example, the usage indication information is used to indicate at least one of: indication information for activating the cell target transmission, indication information for deactivating the cell target transmission, cell information corresponding to an activated cell target transmission, and cell information corresponding to a deactivated cell target transmission.

It is to be noted that, by carrying at least one cell's common information field in the UE-specific information field to transmit the first indication information, the signaling overhead on the network device side can be saved. By carrying the cell-specific information field in the UE-specific information field to transmit the first indication information, personalized indications for different cells of the UE can be achieved, and the state of the cell target transmission corresponding to the cell can be dynamically adjusted according to the service transmission requirements, thereby improving the flexibility of the indication.

In some embodiments, the cell-specific information field carries at least one of the following:
B401, indication information for activating the cell target transmission;
B402, indication information for deactivating the cell target transmission;
B403, cell information corresponding to an activated cell target transmission;
B404, cell information corresponding to a deactivated cell target transmission;
B405, available time information of the cell target transmission;
B406, starting time indication information of an active period of the cell target transmission;
B407, end time indication information of an active period of the cell target transmission;
B408, starting time indication information of an inactive period of the cell target transmission;
B409, end time indication information of an inactive period of the target transmission of the cell;
B410, indication information related to configuration of the cell target transmission;
B411, update information related to configuration of the cell target transmission;
B412, information related to feedback information of the first indication information;
B413, parameter information corresponding to configuration of the cell target transmission.

In some embodiments, when the first signaling belong to UE-specific signaling, the first indication information field includes at least one of the following: a common information field of at least one cell and a cell-specific information field.

In this case, the information carried in the common information field of at least one cell is at least one item of B301-B3 10; the information carried in the cell-specific information field is at least one item of B401-B413.

In some embodiments, the first indication information field satisfies at least one of the following:
B51, being a newly added information field in the first signaling;

For example, after receiving the first signaling, the UE can obtain parameters specifically included in the first indication information by parsing the newly added information field.

B52, being a redefinition of a target information field in the first signaling.

It is to be noted that the target information field is an existing information field in the first signaling, that is, the first indication information field reuses the existing information field in the first signaling. For example, the target information field is a secondary cell dormancy indication field, a wake-up indication information field, and the like.

In some embodiments, when the first indication information field is a redefinition of the target information field in the first signaling, the first signaling includes at least one of the following:
downlink control information DCI format 2_6, DCI format 0_0, DCI format 0_1, DCI format 0_2, DCI format 1_0, DCI format 1_1, DCI format 1_2.

It is to be noted that, in order to successfully receive the first signaling, the UE needs to first obtain a first resource for receiving the first signaling. In some embodiments, A specific implementation of receiving the first signaling includes:
obtaining a first resource through the second mode;
receiving, on the first resource, the first signaling;
where the second mode includes at least one of the following:
pre-configuration, protocol agreement, and indication in downlink signaling.

In some embodiments, when the second mode includes pre-configuration, the first resource is preconfigured on a first receiving cell.

In some embodiments, the first receiving cell includes at least one of the following:
C11, the first receiving cell includes a primary cell;
C12, the first receiving cell includes a secondary cell.

The secondary cell may be understood as any one or more secondary cells among the secondary cells configured for the UE.

In some embodiments, the first receiving cell is a cell belonging to a cell group configured by the network device.

In some embodiments, the cell group includes at least one of the following:
C21, a cell group corresponding to a first DRX group of the UE;
C22, a cell group corresponding to a second DRX group of the UE;

It is to be noted that the above first DRX group refers to a DRX group corresponding to the primary cell or a DRX group corresponding to the primary cell and some secondary cells, and the second DRX group refers to a DRX group corresponding to some secondary cells.

C23, a cell group corresponding to the cell target transmission;
It is to be noted that, in this case, the cell group is configured based on the cell target transmission.

C24, a cell group corresponding to network energy saving;
It is to be noted that, in this case, the cell group is configured based on network energy saving.

C25, dormant cell group.

The pre-configuration of the first resource is illustrated hereinafter with an example.

Case 1: PCell and SCell adopt a common cell DTX/cell DRX configuration.

The UE receives a first signaling of a cell DTX and/or a cell DRX on a PCell according to a first resource for transmitting the first signaling; where the first signaling is used to indicate activation of the cell DTX and/or the cell DRX, and the first signaling carries an information indication for activating the cell DTX and/or cell DRX and is used to indicate activation of the cell DTX and/or the cell DRX. The cell DTX and/or the cell DRX is applied to a specific cell, or a cell group, or all cells.

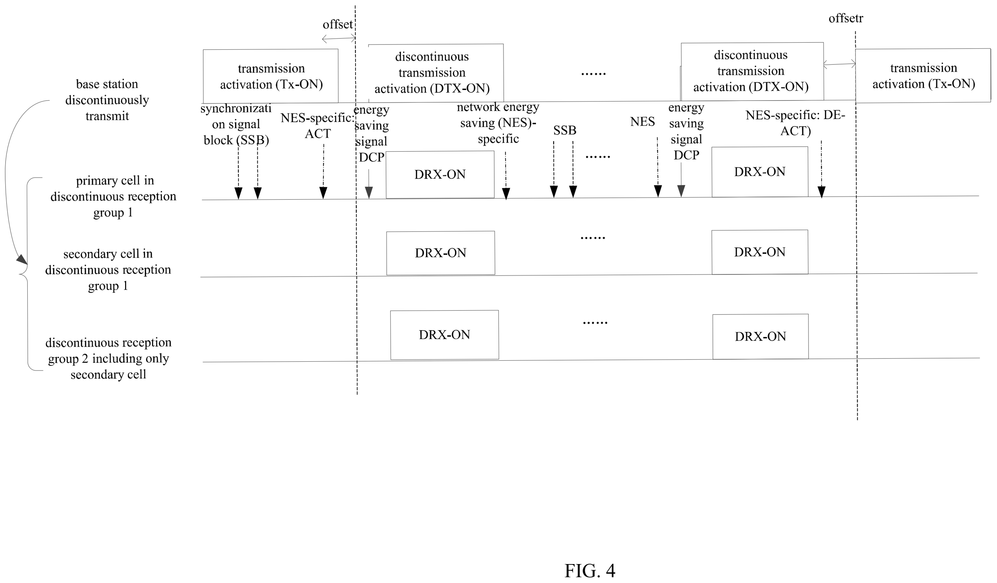

It is to be noted that the first signaling is received only during an inactive period of the UE's RRC_CONNECTED mode DRX (C-DRX), as shown in FIG. 4. For example, the deactivation signaling is received within a specific time window before the UE's C-DRX active period.

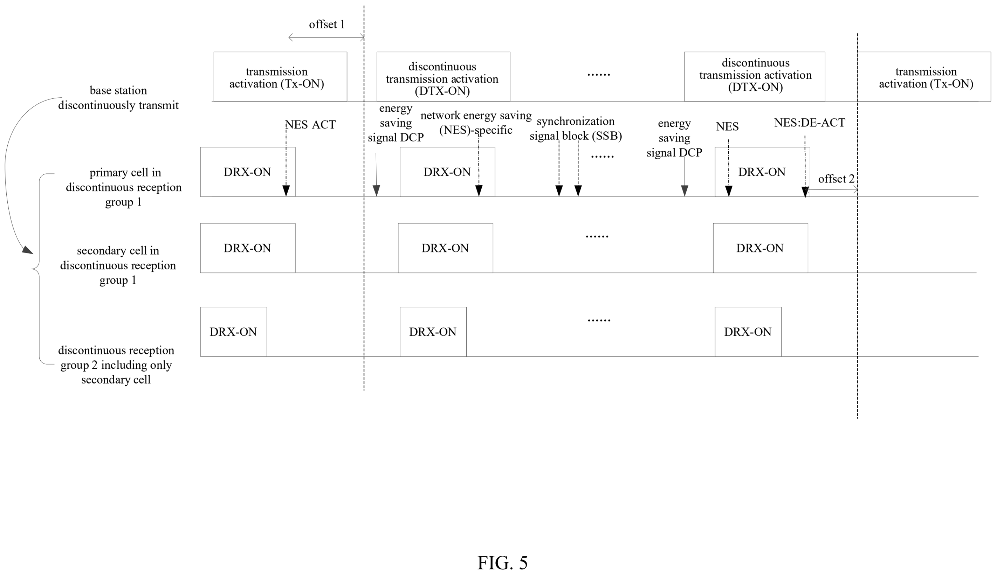

The first signaling is received only during the C-DRX active period of the UE, as shown in FIG. 5. For example, the first signaling based on PDCCH is subject to restriction of C-DRX of the UE.

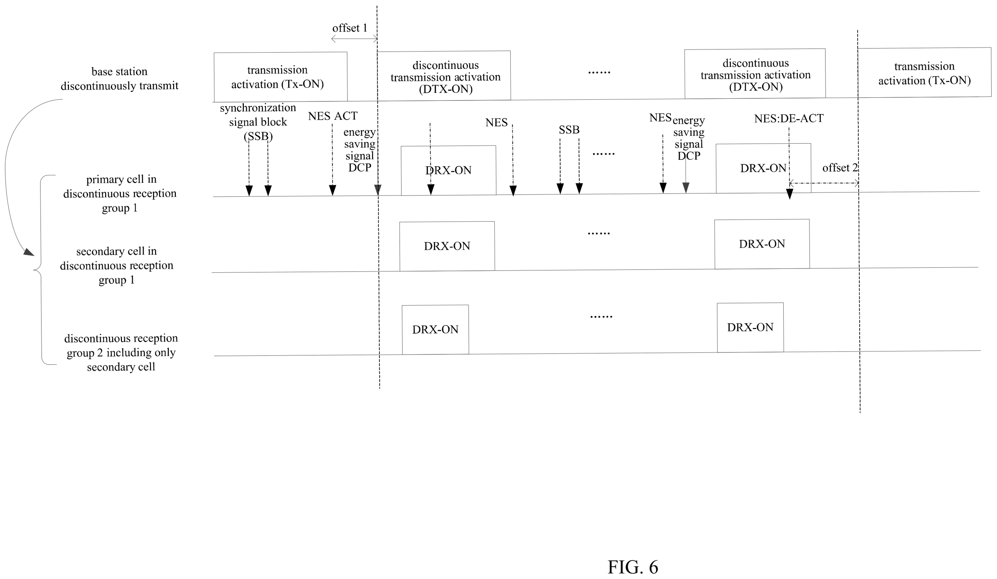

The first signaling is independent of the C-DRX of the UE, that is, it can be received during the C-DRX inactive period of the UE and can also be received during the C-DRX active period of the UE, as shown in FIG. 6.

Case 2: Cells in the same DRX group adopt a common cell DTX/cell DRX configuration.

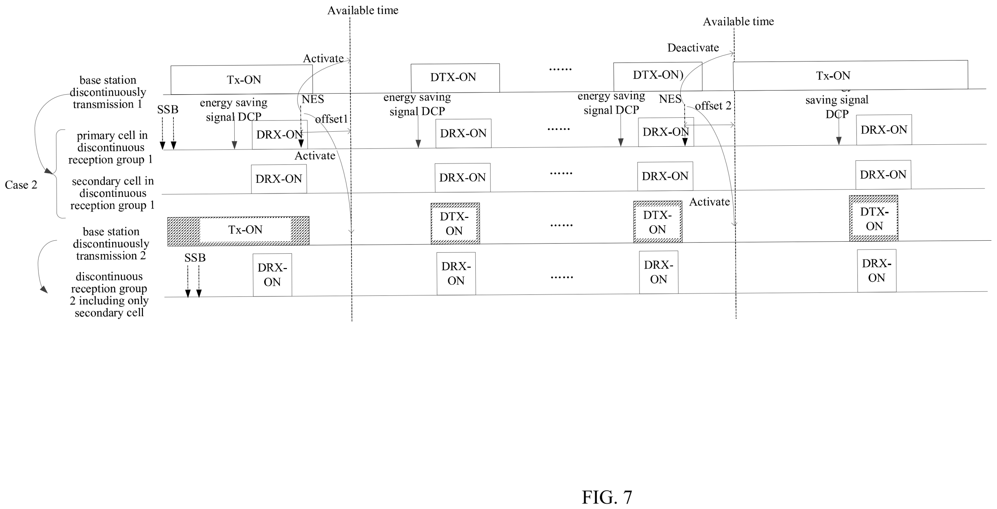

For the case 2, as shown in FIG. 7, the UE receives a first signaling on a Pcell according to a first resource for transmitting the first signaling, and the first signaling carries activation and/or deactivation indication for a cell DTX/cell DRX of all cells or at least one cell group. The activation information of the cell DTX/cell DRX of the cells included in the first signaling can be indicated in the form of a cell group, or can be indicated individually in the form of a cell (for example, all cells in the current cell group). The cell group can be cells under the same C-DRX group where the PCell is located, or it can be a cell group exclusively configured by the base station. There is a corresponding Cell DTX/DRX transmission for the cells in the same group.

Case 3: different cells adppt different cell DTX/cell DRX configurations.

For the case 3, the UE receives a first signaling on a Pcell according to a first resource for transmitting the first signaling, and the first signaling carries activation and/or deactivation information of cell DTX/cell DRX of all cells or at least one cell. The first signaling may also include an activation indication of cell DTX/cell DRX of all cells, or an activation indication of cell DTX/cell DRX of at least one specific cell. The at least one specific cell includes a PCell, and/or at least one specific SCell.

It is to be noted that reception manners of the first signaling may include at least one of the following situations:
the first signaling is received only during the inactive period of the C-DRX group where the UE's PCell is located; for example, reception of the first signaling occurs within a specific time window before the active period of the UE's C-DRX cycle;
the first signaling is received only during the active period of the C-DRX of the UE's PCell; for example, PDCCH-based first signaling is subject to restriction of the UE's C-DRX;
reception of the first signaling is independent of the C-DRX of the UE's PCell, that is, it can be received during both the active and inactive periods of the UE's C-DRX cycle. For example, PDCCH-based first signaling is not restricted by the UE's C-DRX, or the first signaling is received during a specific time window before the activation/deactive period of cell DTX/cell DRX transmission, or it is received at a first resource location pre-configured by the base station where the first signaling is transmitted.

It is to be noted that the target cell group may be pre-configured by the network device, may be indicated by the network device through downlink signaling, or may be agreed upon by a protocol.

In some embodiments, when the first resource is pre-configured based on a BWP, the BWP for transmitting the first indication information includes: at least one BWP supported by a cell.

It is to be noted that the cell mentioned above can be understood as a configured cell, and the configured cell is a cell configured by the network device for the UE to provide services for the UE.

In some embodiments, the at least one BWP includes at least one of the following:
C21, BWP dedicated to target transmission;
C22, BWP dedicated to network energy saving;
C23, non-initial BWP;
C24, non-dormant BWP;
C25. other BWPs in the configured cell with exception of any of the following: the BWP dedicated to target transmission, the BWP dedicated to network energy saving, the non-initial BWP and the non-dormant BWP.

In some embodiments, when the second mode includes a protocol agreement, the first resource satisfies at least one of the following:
C31, located within an active period of C-DRX of the UE;
C32, located outside an active period of the C-DRX of the UE;
C33, located within an active period of the cell target transmission;
C34, located outside an active period of the cell target transmission.

In some embodiments, when the second mode includes pre-configuration, the first resource satisfies at least one of C41 to C43.

C41, having an association relationship with a target reference signal.

It is to be noted that the target reference signal can be a demodulation reference signal (DMRS), a sounding reference signal (SRS), a channel state information reference signal (CSI-RS), a synchronization signal block (SSB), a CSI-RS for tracking (TRS) reference signal, a positioning reference signal (PRS), etc. The association relationship here can be indicated by configuration in high layer signaling and/or protocol agreement. For example, the protocol stipulates that the first signaling has an association relationship only with SSB before the C-DRX active period of the UE, and the high layer signaling configures a first resource for the first signaling, and the first resource is located in a specific time window associated with a specific SSB before the C-DRX active period of the UE. The base station can also directly configure a first resource within a specific time window associated with a specific SSB before the C-DRX active period of the UE through high layer signaling. The above association relationship is only for illustration.

C42, having an association relationship with a target data transmission channel.

For example, the target data transmission channel may be PDSCH, PUSCH, or configured grant PUSCH, semi-persistent scheduling PDSCH (SPS PDSCH), etc.

C43, having an association relationship with a target control channel.

For example, the target control channel can be PDCCH, PUCCH, etc., or it can be a specific control channel, such as an energy-saving signal (such as, DCI with CRC scrambled by PS-RNTI (DCP)), hybrid automatic repeat request acknowledgement (HARQ-ACK) carrying PDSCH, MAC CE of C-DRX command, etc. For example, the protocol stipulates that the first signaling is received only before an energy-saving signal, and the high layer signaling configures a first resource for the first signaling, and the first resource is located in a specific time window before the energy-saving signal. The base station can also directly configure the first resource located in a specific time window before the energy-saving signal through high layer signaling. The above association relationship is only for illustration.

In some embodiments, when the second mode includes indication in downlink signaling, the downlink signaling is used to indicate one or more of a plurality of resource parameter configurations configured by the network device.

This situation can be understood as that the network device pre-configures multiple sets of resource parameter configurations and indicates specific parameter configurations through downlink signaling.

In some embodiments, the method further includes:
obtaining a first target cell in a third mode;
where the third mode includes at least one of the following:
   agreement;
   pre-configuration;
   indicating through first indication information.

In some embodiments, the first target cell includes at least one of the following:
D11, primary Cell;
D12, at least one target secondary cell;

The target secondary cell may be understood as a cell that needs to perform cell target transmission among secondary cells configured for the UE.

D13, at least one cell in at least one target cell group.

In some embodiments, the target cell group is at least one of C121-C125.

In some embodiments, the method further includes:
transmitting feedback information of the first indication information to the network device.

In some embodiments, the feedback information includes at least one of the following:
D21, hybrid automatic repeat request acknowledgement (HARQ-ACK) feedback information;
In some embodiments, when the network device transmits the first indication information through the first signaling, if the UE receives the first indication information, the UE will transmit HARQ-ACK feedback information.

D22, MAC layer reception confirmation information.

In some embodiments, when the network device transmits the first indication information through the first signaling, if the UE receives the first indication information, the UE transmits MAC layer reception confirmation information.

In some embodiments, the network device configures a feedback information dedicated timer through RRC layer signaling. When the network device transmits the first indication information through the first signaling, before the timer expires, the UE needs to transmit feedback information to the network device. Alternatively, the UE can transmit feedback information to the network device only after the timer expires. In this case, the network device and the UE maintain the same timer to determine whether the first signaling is received.

In some embodiments, a specific implementation of transmitting the feedback information of the first indication information to the network device includes:
obtaining a second resource through a fourth mode;
transmitting feedback information to the network device through the second resource;
where the fourth mode includes at least one of the following:
   configuration in high layer signaling, protocol agreement, and indication in downlink signaling.

In some embodiments, the network device configures relevant information of the second resource through high layer signaling. For example, the relevant information of the second resource includes at least one of the following: relevant resource information of uplink control signaling where the feedback information is located, relevant resource information of PUSCH where the feedback information is located, a feedback information dedicated timer which is used to limit an earliest or latest transmission time of the feedback information, and association relationship between the feedback information and the first signaling. The association relationship includes at least one of the following: time gap, relationship between carrier frequency and/or bandwidth, spatial association relationship, etc. When the feedback information is carried by uplink control information (UCI) or PUSCH, the resource information includes at least one information in the time domain, frequency domain, spatial domain, and code domain.

In some embodiments, the protocol stipulates that the UE needs to transmit feedback information in an earliest available uplink slot or uplink symbol set after receiving the first indication information.

In some embodiments, the UE receives downlink signaling indicating a resource location of the feedback information (for example, the resource location includes at least one of the following: time domain location, frequency domain location, spatial domain location). The downlink signaling may be the same signaling as the first signaling, or may be a signaling different from the first signaling to separately indicate the resource location of the feedback information. The resource location includes at least one of the following: carrier frequency or cell information where the feedback information is located, PUCCH resource identifier (ID) or index value where the feedback information is located, channel information carried by the feedback information, etc.

It is to be noted that after receiving the first indication information, the UE also needs to perform a first operation based on the first indication information; in some embodiments, the first operation includes at least one of the following:
E11. activating a cell target transmission of a first target cell at a target time;
For example, the UE activates cell DTX of a specific cell at a target time.
E12. deactivating a cell target transmission of a first target cell at a target time;
For example, the UE deactivates cell DRX of a specific cell at a target time.
E13. adjusting a cell target transmission of a first target cell at the target time;
For example, the UE adjusts parameter information used for cell DRX of a specific cell at the target time.
E14. starting or ending an active period of a cell target transmission of a first target cell at a target time;
For example, the UE determines at a target time that cell DRX of a specific cell enters an active period.
E15. starting or ending an inactive period of a cell target transmission of a first target cell at a target time;
For example, the UE determines at a target time that cell DTX of a specific cell enters an inactive period.

In some embodiments, the target time is determined by at least one of the following:
E21, time of receiving the first indication information;
E22, reception time of the first indication information plus a preconfigured offset value;
E23, reception time of the first indication information and subcarrier spacing of the first target cell;
E24, transmission time of feedback information corresponding to the first indication information;
E25, transmission time of feedback information corresponding to the first indication information plus a preconfigured offset value;
E26, transmission time of feedback information corresponding to the first indication information and subcarrier spacing of the first target cell.

The following illustrates specific application scenarios of the embodiments of the present disclosure by taking communication between a base station and a UE as an example.

Application scenario 1: UE receives first indication information at A first resource location.

The base station configures for the UE a first resource where a first signaling carrying first indication information is located, where the first resource includes at least one of time domain resource, frequency domain resource, and spatial domain resource. The base station mainly configures at least one of the following:
F11, cell information where the first signaling is located;
The cell information where the first signaling is located includes at least one of the following:
   F111, configured only on PCell, that is, a serving cell index (ServCellIndex) is 0;
   F112. configured on a specific SCell, that is, a serving cell index (ServCellIndex) is a non-zero value;
   F113, configured on any one or more serving cells;
   F114, configured on a cell associated with a specific carrier.

F12. configuring a specific BWP associated with the cell;
The specific BWP includes at least one of the following:
F121, BWP of non-cell DTX and/or non-cell DRX;
F122, BWP dedicated to cell DTX and/or cell DRX;
F123, any BWP, specifically, which can be configured based on high layer signaling;
F124, non-initial BWP;
F125, non-dormant BWP;
F126, BWP dedicated to network energy saving.

F13, a receiving mode of the first signaling;
The first signaling may be received in at least one of the following ways:
F131, periodic reception;
For example, the base station configures its receiving period and offset through high layer signaling;
F132, semi-persistent reception;
For example, a receiving position of the first signaling needs to be specifically indicated by the signaling; for example, the base station instructs the UE to perform reception within a specific time period, such as, performing reception within an active period and/or inactive period of cell DTX/cell DRX.

F133, reception in a specific window;
For example, the base station perform reception configures at least one of a starting position, an ending position and a duration of its time window, through high layer signaling.

F14, a receiving position of the first signaling may be associated with the UE C-DRX, for example, the first signaling is received only during the C-DRX active period, or the first signaling is received only outside the C-DRX active period.

In some embodiments, the receiving location of the first signaling being associated with the terminal C-DRX, includes one or more combinations of the following:
Mode 1: the UE performs reception only during the inactive period of C-DRX. The base station may configure a reception time window for the first signaling. The time window is located before the active period of C-DRX and includes at least one or more of the following:
   F141, reception starting position;
   F141, reception end position;
   F141, duration of the reception time window;
   F141, reception period, or period of the reception time window;
   F141, an association relationship between the first signaling and an energy-saving signal (such as DCP), for example, the first signaling is received before the DCP; for another example, the first signaling is received after the DCP; for another example, the first signaling is received within the reception time window of the DCP; for another example, the first signaling and the DCP are the same signaling, etc.
Mode 2: the UE performs reception only during the inactive period of C-DRX. The receiving position of the first signaling is semi-continuous during the inactive period of C-DRX, that is, the base station pre-configures a period and offset value for receiving the first signaling. A reception window can also be configured in the inactive period to reduce unnecessary detection.
Mode 3: the UE performs reception only during the active period of C-DRX. The first signaling is restricted by C-DRX and can be detected only when C-DRX is in the active period.
Mode 4: the first signaling is not affected by C-DRX and can be received during the active period and the inactive period of C-DRX. For example, the CRC-scrambled RNTI of the first signaling based on layer 1 (L1) signaling is not restricted by C-DRX; for another example, the first signaling based on MAC signaling can be carried based on SPS PDSCH; for another example, the receiving position pre-configured based on RRC signaling is associated with a system frame number (SFN) and is not restricted by the UE C-DRX. At this point, the base station can also configure a reception window for the first signaling.

That is, the receiving position of the first signaling may be independent of the UE C-DRX, for example, the receiving of the first signaling is not restricted by the UE C-DRX.

F15, the receiving position of the first signaling may be associated with cell DTX and/or cell DRX transmission;
For example, the first signaling is received within a specific time window before the active period/inactive period of the cell DTX and/or the cell DRX, and the specific time window is preconfigured by the base station.

In some embodiments, the receiving position of the first signaling being associated with cell DTX and/or cell DRX transmission, includes one or more combinations of the following:
Mode 1: the base station preconfigures relevant information of semi-continuous cell DTX and/or cell DRX transmission, and receives the first signaling in a specific time window before the specific cell DTX and/or cell DRX transmission cycle. Here, the specific cell DTX and/or cell DRX transmission cycle can correspond to the cell DTX and/or cell DRX of a specific cell, or a specific cell group, or all cells. The first signaling is used to indicate activation/deactivation of subsequent one or more cell DTX and/or cell DRX transmissions.
Mode 2: the receiving position of the first signaling has no correlation with cell DTX and/or the cell DRX transmission. The first signaling is used to indicate activation/deactivation state of one or more current or subsequent adjacent cell DTX and/or cell DRX.

F16, the first signaling may be at least one of L1 signaling, MAC layer signaling, and RRC layer signaling;
In some embodiments, if the first signaling is L1 signaling, configuration of the first resource includes one or more of the following:
F161, search space set configuration where L1 signaling is located;
F162, starting position of a time window for receiving L1 signaling;
F163, end position of a time window for receiving L1 signaling;
F164, duration of a time window for receiving L1 signaling;
F165: type of L1 signaling, such as group common signaling or UE-specific signaling.

In some embodiments, if the first signaling is an MAC layer signaling, it includes one or more combinations of PDSCH time-frequency resource location, a size of occupied resources of an activation/deactivation information field, etc.

In some embodiments, if the first signaling is an RRC signaling, it includes a time domain location, such as one or more combinations of a period and an offset value, a size of occupied resources of an activation/deactivation information field, etc.

F17, type indication information of the first signaling, for example, the first signaling is L1 signaling, MAC layer signaling, RRC signaling or protocol agreement.

Note: the first signaling received by the same cell, cell group or all cells may be the same type of signaling or different types of signaling. For the same type of signaling, activation and deactivation may also be indicated by different signalings.

Application scenario 2: the first indication information is carried through group common signaling.

The UE receives the first signaling, and obtains relevant information of activating and/or deactivating a cell target transmission of a first target cell and/or transmission related information of the cell target transmission of the first target cell, through the first indication information carried by the first signaling.

Specifically, the relevant information of activating and/or deactivating the cell target transmission of the first target cell includes at least one of the following:
indication information for activating the cell target transmission;
indication information for deactivating the cell target transmission;
available time information of the cell target transmission;
cell information corresponding to an activated cell target transmission;
carrier information corresponding to an activated cell target transmission;
cell information corresponding to a deactivated cell target transmission;
carrier information corresponding to a deactivated cell target transmission;
starting time indication information of an active period of the cell target transmission;
end time indication information of an active period of the cell target transmission;
starting time indication information of an inactive period of the cell target transmission;
end time indication information of an inactive period of the cell target transmission.

Specifically, the transmission related information of the cell target transmission of the first target cell includes at least one of the following:
indication information related to configuration of the cell target transmission;
update information related to configuration of the cell target transmission;
information related to feedback information of the first indication information;
parameter information corresponding to configuration of cell target transmission.

The following are some specific examples.

When the first signaling is L1 signaling, it may be group common L1 signaling, UE-specific L1 signaling, network energy saving (NES)-specific L1 signaling, or redefinition of L1 signaling in related technologies.

The group-common L1 signaling includes at least one UE's common information field and/or UE-specific information field.

The UE-specific information field of different UEs can be cascaded or can be UE-specific information field of specified UEs. The specific position of the UE-specific information field in the first signaling is preconfigured by the high layer signaling. The UE-specific information field includes information of at least one specific cell or specific cell group. The information field corresponding to each UE can refer to the UE-specific L1 signaling.

The UE-specific information field of different UEs includes common information of at least one specific cell (group) of the UE group or of specific cells (group). The specific cells or specific cell groups of different UEs can be configured through high layer signaling or agreed upon by protocol.

In some embodiments, the common information field of at least one UE includes at least one of the following:
indication information for activating and/or deactivating cell DTX, which is used to indicate activation and/or deactivation of DTX transmission of cells or cell groups configured or indicated for all UEs in the first signaling; the specific cells or cell groups are configured by high layer signaling of the base station, such as, indicating PCell of a UE group, or cells or cell groups indicated by high layer signaling indicating the UE group;
indication information for activating and/or deactivating cell DRX, which is used to indicate activation and/or deactivation of DRX transmission of cells or cell groups configured or indicated for all UEs in the first signaling; the specific cells or cell groups are configured by high layer signaling of the base station, such as, PCell indicating a UE group, or cells or cell groups indicated by high layer signaling indicating the UE group;
usage indication information of a UE-specific information field, such as DTX transmission and/or DRX transmission information field indication, DTX transmission and/or DRX transmission parameter configuration indication, DTX transmission and/or DRX transmission specific parameter indication, etc.

In some embodiments, the UE-specific information field includes at least one of the following:
cell information corresponding to activated and/or deactivated cell DTX;
for example, at least one of cell ID, cell index, cell list or cell list mapping indication corresponding to activated/deactivated cell DTX; for example, at least one of cell group ID, cell group index, cell group list or cell group mapping indication for activated/deactivated DTX transmission;
cell information corresponding to activated and/or deactivated of cell DRX;
for example, at least one of cell ID, cell index, cell list or cell list mapping indication for activated and/or deactivated DRX transmission; for example, at least one of cell group ID, cell group index, cell group list or cell group mapping indication for activated and/or deactivated DRX transmission;
indication information for activating and/or deactivating cell DTX of at least one cell or cell group;
indication information of activating and/or deactivating cell DRX of at least one cell or cell group;
at least one of DTX transmission parameter indication information of at least one cell or cell group, DTX transmission parameter index, and activation and/or deactivation indication of a specific DTX transmission parameter;
at least one of DRX transmission parameter indication information of at least one cell or cell group, DRX transmission parameter index, and activation and/or deactivation indication of a specific DRX transmission parameter.

Taking the UE-specific information field being indication information for activating and/or deactivating cell DTX/cell DRX as an example, the format of the first signaling is shown in Table 1.

**Table 1 Format of the first signaling**

| | group common information Field | UE-Specific Information Field for UE #1 | ...... | UE-Specific Information Field for UE #N |
|---|---|---|---|---|
| mode 1 | DTX transmission activation/deactivation indication; and/or DRX transmission activation/deactivation indication | - | ...... | - |
| mode 2 | DTX transmission activation/deactivation indication | DTX activation/deactivation indication for at least one cell or cell group | ...... | DRX activation/deactivation indication for at least one cell or cell group |
| mode 3 | DRX transmission activation/deactivation indication | DTX activation/deactivation indication for at least one cell or cell group | ...... | DTX activation/deactivation indication for at least one cell or cell group |
| mode 4 | Indication of DTX transmission and/or DRX transmission information field, e.g.: "1": DRX transmission | activation/deactivation indication for at least one cell or cell group, e.g.: Bit mapping 11011, or based on higher layer | ...... | activation/deactivation indication for at least one cell or cell group, e.g.: Bit mapping 11011, or based on higher layer signaling configuration |
| | | signaling configuration | | |
| mode 5 | DTX transmission activation/deactivation indication; and/or DRX transmission activation/deactivation indication, e.g.: "1" for activation, "0: for deactivation | cell ID/index or cell group ID/index, or bit mapping for at least one cell, or bit mapping for at least one cell group, e.g.: 11011, meaning activating the 1st, 2nd, 4th and 5th cell or cell group | ...... | cell ID/index or cell group ID/index, or bit mapping for at least one cell, or bit mapping for at least one cell group, e.g.: 10001, meaning activating the 1st and 5th cell or cell group |
| mode 6 | - | DTX activation/deactivation indication for at least one cell or cell group; and/or DRX activation/deactivation indication for at least one cell or cell group | ...... | DTX activation/deactivation indication for at least one cell or cell group; and/or DRX activation/deactivation indication for at least one cell or cell group |
| mode 7 | indication of DTX transmission and/or DRX transmission parameter configuration, e.g., configuration 1, configuration 2, etc. | cell ID/index or cell group ID/index, or bit mapping for at least one cell, or bitmask for at least one cell group | | cell ID/index or cell group ID/index, or bit mapping for at least one cell, or bitmask for at least one cell group |
| mode 8 | indication of specific parameters for DTX and/or DRX transmission, e.g., transmission period, active period duration, etc. | cell ID/index or cell group ID/index, or bit mapping for at least one cell, or bitmask for at least one cell group | | cell ID/index or cell group ID/index, or bit mapping for at least one cell, or bitmask for at least one cell group |

Note: the content of the first signaling may be in at least one of the following forms: cell DTX and cell DRX may be independent information fields or jointly coded information fields. No further details will be given here.

Application Scenario 3: the first indication information is carried by UE-specific signaling.

The information indication mode of at least one cell (group) carried in the UE-specific information field in the first signaling is one or more of the following:
Mode 1: bit mapping, N bits,
For example, each bit corresponds to different functions of all cells, such as N bits correspond to one or more of DTX activation/deactivation, DRX activation/deactivation, cell DTX/cell DRX transmission parameter 1, ..., cell DTX/cell DRX transmission parameter N, cell DTX/cell DRX transmission configuration 1, ..., cell DTX/cell DRX transmission configuration K.

For another example, every N1 bits corresponds to a cell group, or corresponds to a specific function of a cell, and N1 is greater than or equal to 0, such as cell DTX/cell DRX configuration is activation/deactivation, cell DTX/cell DRX transmission parameter k, cell DTX/cell DRX transmission configuration n, etc. The number of bits for different specific functions may be different.

Mode 2: N bits (2N values) are jointly coded for indication, such as each value corresponding to activation/deactivation and/or specific cell DTX/cell DRX related information (value) of cell DTX/cell DRX configuration for all cells, specific cells, or specific cell groups. The specific mapping relationship can be configured via higher layer signaling or predefined by protocol.

Mode 3: specifically indicating a cell or cell group ID or index value associated with the information field; and/or
a cell DTX/cell DRX configuration of the corresponding cell or cell group is activated/deactivated; and/or
a specific indication of specific cell DTX/cell DRX related information (value), the indication meaning of the specific information field is configured through high layer signaling or agreed upon in the protocol.

Mode 4: the same function indication for at least one cell or cell group may be one or more items in the first indication information. For example, N2 bits in the first indication information field are used to indicate specific functions of the subsequent information field, such as activating/deactivating cell DTX/cell DRX. N3 bits in the first indication information field are used to activate/deactivate cell DTX/cell DRX, where N2 is greater than or equal to 1, and N3 is greater than or equal to 0.

Application scenario 4: receiving activation/deactivation signaling only in PCell.

The cell DTX transmission activation/deactivation information field and the cell DRX transmission activation/deactivation information field may be cascaded or indicated independently.

The activation/deactivation signaling received on the PCell may be the same signaling, one of the two, or different signaling, specifically including one or a combination of the following:
Case 1: a first signaling is received in the PCell, and the first signaling is used to activate/deactivate the cell DTX/cell DRX of all cells. Here, the cell DTX/cell DRX of all cells may be the same cell DTX/cell DRX or different cell DTX/cell DRX.

The information field carried by the first signaling may be as shown in any one of Table 2 to Table 4:

**Table 2: condition 1: information fields carried by first signaling**

| | |
|---|---|
| DTX transmission activation/deactivation for all cells: 1 indicates activation, 0 indicates deactivation. | DRX transmission activation/deactivation for all cells: 1 indicates activation, 0 indicates deactivation. |

**Table 3: condition 2: information fields carried by first signaling**

| |
|---|
| activation/deactivation for DTX transmission of cell group to which PCell belongs: 1 indicates activation, 0 indicates deactivation. |

**Table 4: condition 3: information fields carried by first signaling**

| |
|---|
| activation/deactivation for DRX transmission of cell group to which PCell belongs: 1 indicates activation, 0 indicates deactivation. |

Case 3: a first signaling is received in PCell, the first signaling is used to activate/deactivate cell DTX/cell DRX of one or more cell groups; the cell group is preconfigured by the base station, and can also be a cell group associated with a DRX group or a cell group associated with an SCell sleep group.

The information field carried by the first signaling may be any one of Tables 5 to 10, where N and M may be different.

**Table 5: condition 4: information fields carried by first signaling**

| | | | | | | |
|---|---|---|---|---|---|---|
| DTX transmission activation/deactivation information field | | | ... | DRX transmission activation/deactivation information field | | |
| | | | ... | | | |
| DTX transmission activation/deacti vation for cell group 1: 1: activate, 0: deactivate | ... | DTX transmission activation/deacti vation for cell group N: 1: activate, 0: deactivate | ... | DRX transmission activation/deacti vation for cell group 1: 1: activate, 0: deactivate | ... | DRX transmission activation/deacti vation for cell group N: 1: activate, 0: deactivate |
| | ... | | ... | | ... | |

**Table 6: condition 5: information fields carried by first signaling**

| | | | | | | | | | |
|---|---|---|---|---|---|---|---|---|---|
| DTX transmission activation/deactivation information field | | | | | DRX transmission activation/deactivation information field | | | | |
| cell group ID or index in the cell group list | DTX transmission activation /deactivation for cell group 1: 1: activate, 0: deactivate | ... | cell grou p ID or index in the cell group list | DTX transmission activation/ deactivation for cell group 1: 1: activate, 0: deactivate | cell group ID or index in the cell group list | DRX transmission activation/ deactivation for cell group 1: 1: activate, 0: deactivate | ... | cell group ID or index in the cell group list | DRX transmision activation /deact ivation for cell group 1: 1: activate, 0: deactivate |
| | | ... | | | | | ... | | |

**Table 7: condition 6: information fields carried by first signaling (information field indicating multiple cell groups)**

| | | | |
|---|---|---|---|
| DTX transmission activation/deactivation information field | | | |
| cell group ID #1 or index value #1 of cell group list | ...... | cell group ID #N or index value #N of cell group list | DRX transmission activation/deactivation: 1 : activate, 0: deactivate |

**Table 8: condition 7: information fields carried by first signaling (information field indicating one cell group)**

| | | | |
|---|---|---|---|
| DTX transmission activation/deactivation information field | | | |
| cell ID #1 or index value #1 of cell list | ...... | cell ID #N or index value #N of cell list | DRX transmission activation/deactivation: 1 : activate, 0: deactivate |

**Table 9: condition 8: information fields carried by first signaling**

| DTX transmission activation/deactivation information field | | |
|---|---|---|
| DTX transmission activation/deactivation for cell group 1: 1: activate, 0: deactivate | ...... | DTX transmission activation/deactivation for cell group N: 1: activate, 0: deactivate |

**Table 10: condition 9: information fields carried by first signaling**

| DRX transmission activation/deactivation information field | | |
|---|---|---|
| DRX transmission activation/deactivation for cell group 1: 1: activate, 0: deactivate | ...... | DRX transmission activation/deactivation for cell group M: 1: activate, 0: deactivate |

Case 4: a first signaling is received in PCell, the first signaling is used to activate/deactivate cell DTX/cell DRX of a specific cell. The relevant information of the specific cell may be carried by the first signaling, or may be used to indicate cell DTX/cell DRX of the current cell.

The indication of cell DTX/cell DRX for a specific cell pre-configured by the base station and the current cell, is the same as in the case 1.

The information field carried by the first signaling for a specific cell may be as shown in Table 11.

**Table 11: condition 10: information fields carried by first signaling**

| DTX transmission activation/deactivation information field | |
|---|---|
| Cell ID #1 or Index Value #1 of Cell List | DTX transmission activation/deactivation: 1: activate, 0: deactivate |

Case 5: a first signaling is received in PCell, the first signaling is used to activate/deactivate cell DTX/cell DRX of one or more cells, and at least one cell indicated by the first signaling is preconfigured by the base station, such as configuring a cell list.

The information field for multiple cells carried by the first signaling may be as shown in any one of Tables 12-14, where N and M may be different.

**Table 12: condition 11: information fields carried by first signaling**

| DTX transmission activation/deactivation information field | | | | ... | DRX transmission activation/deactivation information field | | | |
|---|---|---|---|---|---|---|---|---|
| | | | | ... | | | | |
| DTX transmission activation/ deactivation for PCell: 1: activate, 0: deactivate | DTX transmission activation/ deactivation for SCell 1: 1: activate, 0: deactivate | ... | DTX transmission activation/ deactivation for SCell N: 1: activate, 0: deactivate | ... | DRX transmission activation/ deactivation for PCell: 1: activate, 0: deactivate | DRX transmission activation/ deactivation for SCell 1: 1: activate, 0: deactivate | ... | DRX transmission activation/ deactivation for SCell M: 1: activate, 0: deactivate |
| | | ... | | ... | | | ... | |

**Table 13: condition 12: information fields carried by first signaling**

| DTX transmission activation/deactivation information field | | |
|---|---|---|
| DTX transmission activation/deactivation for Cell: 1: activate, 0: deactivate | ...... | DTX transmission activation/deactivation for Cell: N: activate, 0: deactivate |

**Table 14: condition 13: information fields carried by first signaling**

| DRX transmission activation/deactivation information field | | |
|---|---|---|
| DRX transmission activation/deactivation for Cell 1: 1: activate, 0: deactivate | ...... | DRX transmission activation/deactivation for Cell M: N: activate, 0: deactivate |

For the activation/deactivation indication of at least one cell, the first cell or the cell with a cell ID or a cell index of 0 may be defaulted as the Pcell or the specific serving cell.

When the first signaling is received on any SCell, the design of its first indication information is the same as that of the PCell, and details are not repeated here.

Application Scenario 5: the first signaling is an enhanced signaling in the related technology, or a redefinition of some information fields of the signaling in the related technology.

In some embodiments, when the first signaling is an energy-saving signaling, that is, DCI format 2_6, the first indication information field may be a newly introduced information field in the energy-saving signal, or may be a redefinition of an existing information field.

If the first indication information field may be a newly introduced information field in the energy-saving signal, when the UE receives the energy-saving signal, the UE learns that the base station activates/deactivates cell DTX/cell DRX of the target cell, and the specific content of the first indication information field is the same as that of the application scenario 2 to 4. The energy saving of the UE and the base station can be achieved simultaneously through the energy-saving signaling. For example, when the base station instructs, via the energy-saving signal, not to start an activation timer for C-DRX, the base station can simultaneously instruct the UE to activate cell DTX/cell DRX for the current cell or the cell group to which the current cell belongs. Conversely, when the base station instructs, via the energy-saving signal, to start an activation timer for C-DRX, the base station can also instruct the UE to deactivate cell DTX/cell DRX transmission for the current cell or the cell group to which the current cell belongs.

When the first indication information field may be a redefined information field in the energy-saving signal, it may be specifically one or more of the following:
Mode 1: redefined indication information is introduced in DCI format 2_6 to indicate specific meaning of an SCell dormancy indication field. For example, when 1 bit with a value of 1, the SCell dormancy indication field is a Cell DTX/DRX transmission activation/deactivation indication field for the SCell or SCell group; when the value is 0, the dormancy indication field of the SCell group is used to indicate whether the SCell group is in sleep mode.
Mode 2: the specific meaning of the SCell dormancy indication field is interpreted via a wake-up indication field. For example, when the wake-up indication information is 1, it means that when a UE C-DRX activation timer is started, the dormancy indication field of the SCell group is used to indicate whether the SCell group is dormant; when the wake-up indication information is 0, it means that when the UE C-DRX activation timer is not started, the SCell dormancy indication field is a cell DTX/cell DRX transmission activation/deactivation indication field for the SCell or SCell group.
Mode 3: a cell DTX/cell DRX transmission activation/deactivation indication is associated with wake-up indication information. When the wake-up indication information is 0, it means that when the UE C-DRX activation timer is not started, the cell DTX/cell DRX of the specific cell or cell group of the UE is activated/deactivated, or enters an active period/inactive period of the cell DTX/cell DRX. When the wake-up indication information is 1, it means that when the UE C-DRX activation timer is syarted, the cell DTX/cell DRX transmission of the specific cell or cell group of the UE is deactivated/activated, or enters an active period/inactive period of the cell DTX/cell DRX transmission.
Mode 4: Cell DTX/cell DRX transmission activation/deactivation indication is associated with SCell dormancy indication information. When the SCell dormancy indication is used to indicate that the SCell group enters a dormancy state, the corresponding SCell group activates/deactivates the corresponding cell DTX/cell DRX transmission; when the SCell dormancy indication is used to indicate that the SCell group enters an active state, the corresponding SCell group deactivates/activates the corresponding cell DTX/cell DRX transmission.

In some embodiments, when the first signaling is a downlink DCI carrying data information, the first indication information field may be a newly introduced information field in the energy-saving signal, or may be a redefinition of an existing information field.

When the first signaling is a downlink DCI carrying data information, the downlink DCI signaling may be any one or more combinations of DCI formats 0_0/0_1/0_2/1_0/1_1/1_2. The newly introduced information fields can refer to the application scenarios 2 to 4.

There are at least one of the following modes for redefining an existing information domain:
Mode 1: fallback DCI signaling (e.g., DCI format 0_0 or 1_0) is associated with Cell DTX/DRX transmission deactivation indication of the corresponding cell or cell group, and non-fallback DCI signaling is associated with Cell DTX/DRX transmission activation indication of the corresponding cell or cell group. The specific cell or cell group can be configured through high layer signaling or indicated through a carrier indication field.
Mode 2: if scheduling DCI carries PDSCH scheduling information, cell DTX/cell DRX transmission of the corresponding cell or cell group is deactivated;
Mode 3: if scheduling DCI does not carry PDSCH scheduling information, that is, when a first condition is met, some information bits in first information in TB block information can be used to indicate activation/deactivation of Cell DTX/DRX transmission of at least one cell or cell group.

In some embodiments, the first condition includes:
CRC of DCI format 1_1 is scrambled by C-RNTI or MCS-C-RNTI, and if
one-time HARQ-ACK request field is not present or has a value of 0, and if
the UE detects a DCI format 1_1 in the primary cell that does not include a carrier indicator field, or detects a carrier indicator field with a value equal to 0 in the primary cell, and if
resourceAllocation=resourceAllocationType0, and all bits of a frequency domain resource allocation field in DCI format 1_1 are equal to 0, or
resourceAllocation=resourceAllocationType1, and all bits of a frequency domain resource allocation field in DCI format 1_1 are equal to 1, or
resourceAllocation=dynamicSwitch, and all bits of a frequency domain resource allocation field in DCI format 1_1 are equal to 0 or 1.

In some embodiments, the first information specifically includes:
modulation and coding scheme;
new data indicator;
redundant version;
HARQ process number;
antenna port;
DMRS sequence initialization.

It is to be noted that, in at least one embodiment of the present disclosure, in a CA scenario, the design of the first signaling can realize corresponding activation, deactivation and/or parameter configuration for different cell DTX and/or cell DRX. From the perspective of UEs, the corresponding signal and transmission can be omitted during the inactive period of cell DTX and/or cell DRX; from the perspective of the network, when the service cell of the UE within the service range is in the inactive period of cell DTX and/or cell DRX, corresponding energy-saving operations can be performed to save power consumption.

The technical solution of the embodiment of the present disclosure may be applied to various systems, especially a 5G system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD), LTE time division duplex (TDD) system, long term evolution advanced (LTE-A) system, universal mobile telecommunication system (UMTS), worldwide interoperability for microwave access (WiMAX) system, or 5th-Generation (5G) New Radio (NR) system. Each of these systems includes a terminal (also referred to as terminal device) and a network device. Each system further includes a core network part, e.g., an Evolved Packet System (EPS) or 5G system (5GS/5GC).

The terminal involved in the embodiments of the present disclosure may also be referred to as a terminal device, which may be a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

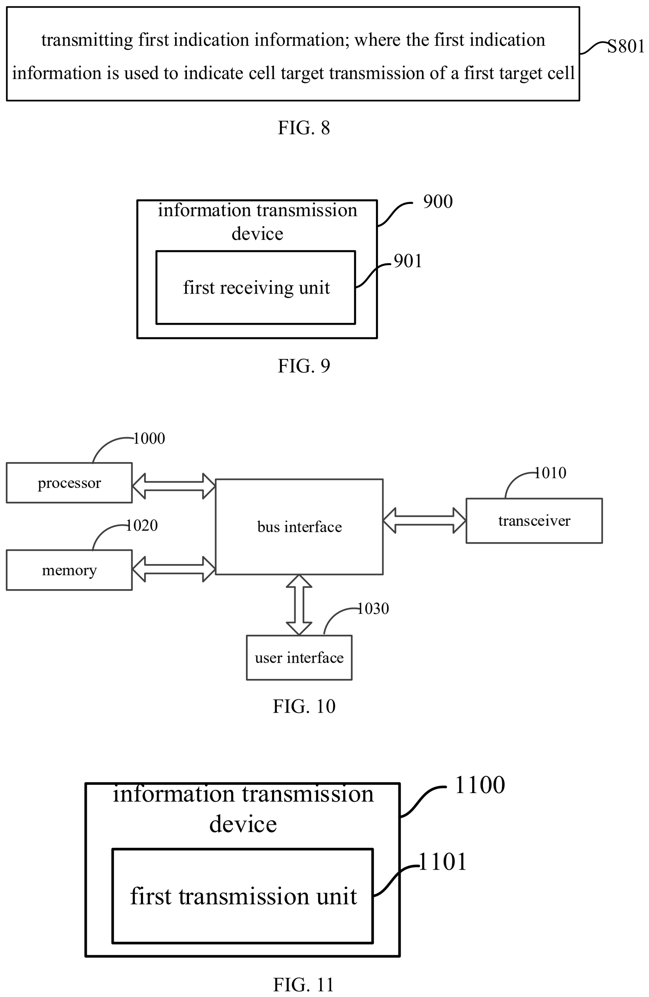

As shown in FIG. 8, one embodiment of the present disclosure provides an information transmission method, which is executed by a network device and includes:
Step S801: transmitting first indication information; where the first indication information is used to indicate cell target transmission of a first target cell;
where the cell target transmission includes at least one of the following: cell discontinuous reception DRX and cell discontinuous transmission DTX.

In some embodiments, the transmitting first indication information includes:
transmitting a first signaling to a user equipment (UE); where the first signaling carries the first indication information.

The first signaling includes at least one of the following:
layer 1 signaling, media access control MAC layer signaling, and radio resource control RRC layer signaling.

In some embodiments, the first signaling belongs to at least one of the following:
group common signaling, UE-specific signaling.

In some embodiments, the scrambling code for the CRC of the layer 1 signaling of the group common signaling includes at least one of the following:
system information radio network temporary identifier (SI-RNTI), paging radio network temporary identifier (P-RNTI), paging early indication RNTI (PEI-RNTI), power saving radio network temporary identifier (PS-RNTI), slot format indication radio network temporary identifier (SFI-RNTI), cell radio network temporary identifier (C-RNTI), modulation and coding scheme C-RNTI (MCS-C-RNTI), configured scheduling radio network temporary identifier (CS-RNTI).

In some embodiments, the scrambling code for the CRC of the layer 1 signaling of the UE-specific signaling includes at least one of the following:
cell radio network temporary identifier (C-RNTI), modulation and coding scheme C-RNTI (MCS-C-RNTI), configured scheduling radio network temporary identifier (CS-RNTI).

In some embodiments, the layer 1 signaling includes at least one of the following:
a layer 1 signaling dedicated for network energy-saving;
a layer 1 signaling dedicated for the cell target transmission.

In some embodiments, a scrambling code for cyclic redundancy check (CRC) of the layer 1 signaling includes at least one of the following:
a radio network temporary identifier (RNTI) dedicated for the cell target transmission;
RNTI dedicated for network energy saving.

In some embodiments, the first indication information includes at least one of the following:
relevant information for activating and/or deactivating the cell target transmission of the first target cell;
transmission related information of the cell target transmission of the first target cell.

In some embodiments, the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

In some embodiments, the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

In some embodiments, the first signaling includes a first indication information field, and the first indication information field is used to carry the first indication information.

The method further includes:
transmitting, through a first mode, a position of the first indication information field in the first signaling, to the UE;
where the first mode includes at least one of the following:
   configuration in high layer signaling;
   indication in broadcast signaling;
   indication in downlink signaling.

In some embodiments, when the first signaling belongs to group common signaling, the first indication information field includes at least one of the following: a common information field of at least one UE and a UE-specific information field.

In some embodiments, the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

In some embodiments, the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

In some embodiments, the UE-specific information field includes at least one of the following: a common information field of at least one cell and a cell-specific information field.

In some embodiments, when the first signaling belongs to UE-specific signaling, the first indication information field includes at least one of the following: a common information field of at least one cell and a cell-specific information field.

In some embodiments, the common information field of the at least one cell carries at least one of the following:
available time information of the cell target transmission;
starting time indication information of an active period of the cell target transmission;
end time indication information of an active period of the cell target transmission;
start time indication information of an inactive period of the cell target transmission;
end time indication information of an inactive period of the cell target transmission;
indication information related to configuration of the cell target transmission;
update information related to configuration of the cell target transmission;
information related to feedback information of the first indication information;
parameter information corresponding to configuration of the cell target transmission;
usage indication information of a cell-specific information field.

In some embodiments, the cell-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the target transmission of the cell;
indication information related to configuration of the cell target transmission;
update information related to configuration of the cell target transmission;
information related to feedback information of the first indication information;
parameter information corresponding to configuration of the cell target transmission.

In some embodiments, the parameter information includes at least one of the following:
transmission period, duration of an active period, duration of an inactive period, starting time of the active period, end time of the active period, starting time of the inactive period, end time of the inactive period.

In some embodiments, the first indication information field satisfies at least one of the following:
being a newly added information field in the first signaling;
being a redefinition of a target information field in the first signaling.

In some embodiments, when the first indication information field is a redefinition of the target information field in the first signaling, the first signaling includes at least one of the following:
downlink control information DCI format 2_6, DCI format 0_0, DCI format 0_1, DCI format 0_2, DCI format 1_0, DCI format 1_1, DCI format 1_2.

In some embodiments, the method further includes:
indicating, through a fifth mode, to the UE, a first resource for transmitting the first signaling;
where the fifth mode includes at least one of the following:
   pre-configuration, indication in downlink signaling.

In some embodiments, when the fifth mode includes pre-configuration, the first resource is pre-configured on a first receiving cell;
where the first receiving cell includes at least one of the following:
a primary cell;
a secondary cell.

In some embodiments, the first receiving cell belongs to a cell in a cell group configured by the network device.

In some embodiments, the cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, when the first resource is pre-configured based on a BWP, the BWP for transmitting the first indication information includes: at least one BWP supported by a cell.

In some embodiments, the at least one BWP includes at least one of the following:
BWP dedicated to target transmission;
BWP dedicated to network energy saving;
non-initial BWP;
non-dormant BWP;
other BWPs in the configured cell with exception of any of the following: the BWP dedicated to target transmission, the BWP dedicated to network energy saving, the non-initial BWP and the non-dormant BWP.

In some embodiments, when the fifth mode includes pre-configuration, the first resource satisfies at least one of the following:
having an association relationship with a target reference signal; having an association relationship with a target data transmission channel; having an association relationship with a target control channel.

In some embodiments, when the fifth mode includes indication in downlink signaling, the downlink signaling is used to indicate one or more of a plurality of resource parameter configurations configured by the network device.

In some embodiments, the first target cell includes at least one of the following:
primary Cell;
at least one target secondary cell;
at least one cell in at least one target cell group.

In some embodiments, the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, the method further includes:
transmitting the first target cell to the UE through a sixth mode;
where the sixth mode includes at least one of the following:
   pre-configuration;
   indicating through first indication information.

In some embodiments, the method further includes:
receiving feedback information of the first indication information transmitted by the UE.

In some embodiments, the feedback information includes at least one of the following:
hybrid automatic repeat request acknowledgement (HARQ-ACK) feedback information;
MAC layer reception confirmation information.

In some embodiments, the method further includes at least one of the following:
indicating, through configuration in high layer signaling, to the UE, a second resource for transmitting feedback information;
indicating, through indication in downlink signaling, to the UE, a second resource for feedback information.

It is to be noted that all implementations in the above embodiments are applicable to the embodiments of the information transmission method applied to the network device side, and can achieve the same technical effect, which will not be repeated here.

As shown in FIG. 9, one embodiment of the present disclosure provides an information transmission device 900, which is applied to a user equipment (UE) and includes:
a first receiving unit 901 used to receive first indication information; where the first indication information is used to indicate a cell target transmission of a first target cell.

The cell target transmission includes at least one of the following: cell DRX and cell DTX.

In some embodiments, the first receiving unit 801 is used to:
receive a first signaling; where the first signaling carries the first indication information;
obtain the first indication information in the first signaling;
where the first signaling includes at least one of the following:
   layer 1 signaling, MAC layer signaling, and RRC layer signaling.

In some embodiments, the first signaling belongs to at least one of the following:
group common signaling, UE-specific signaling.

In some embodiments, the scrambling code for the CRC of the layer 1 signaling of the group common signaling includes at least one of the following:
system information radio network temporary identifier (SI-RNTI), paging radio network temporary identifier (P-RNTI), paging early indication RNTI (PEI-RNTI), power saving radio network temporary identifier (PS-RNTI), slot format indication radio network temporary identifier (SFI-RNTI), cell radio network temporary identifier (C-RNTI), modulation and coding scheme C-RNTI (MCS-C-RNTI), configured scheduling radio network temporary identifier (CS-RNTI).

In some embodiments, the scrambling code for the CRC of the layer 1 signaling of the UE-specific signaling includes at least one of the following:
cell radio network temporary identifier (C-RNTI), modulation and coding scheme C-RNTI (MCS-C-RNTI), configured scheduling radio network temporary identifier (CS-RNTI).

In some embodiments, the layer 1 signaling includes at least one of the following:
a layer 1 signaling dedicated for network energy-saving;
a layer 1 signaling dedicated for the cell target transmission.

In some embodiments, a scrambling code for cyclic redundancy check (CRC) of the layer 1 signaling includes at least one of the following:
a radio network temporary identifier (RNTI) dedicated for the cell target transmission;
RNTI dedicated for network energy saving.

In some embodiments, the first indication information includes at least one of the following:
relevant information for activating and/or deactivating the cell target transmission of the first target cell;
transmission related information of the cell target transmission of the first target cell.

In some embodiments, the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

In some embodiments, the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

In some embodiments, the first signaling includes a first indication information field, and the first indication information field is used to carry the first indication information.

The device further includes:
a first obtaining unit used to obtain, through a first mode, a position of the first indication information field in the first signaling;
where the first mode includes at least one of the following:
   configuration in high layer signaling;
   indication in broadcast signaling;
   indication in downlink signaling.

In some embodiments, when the first signaling belongs to group common signaling, the first indication information field includes at least one of the following: a common information field of at least one UE and a UE-specific information field.

In some embodiments, the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

In some embodiments, the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

In some embodiments, the UE-specific information field includes at least one of the following: a common information field of at least one cell and a cell-specific information field.

In some embodiments, when the first signaling belongs to UE-specific signaling, the first indication information field includes at least one of the following: a common information field of at least one cell and a cell-specific information field.

In some embodiments, the common information field of the at least one cell carries at least one of the following:
available time information of the cell target transmission;
starting time indication information of an active period of the cell target transmission;
end time indication information of an active period of the cell target transmission;
start time indication information of an inactive period of the cell target transmission;
end time indication information of an inactive period of the cell target transmission;
indication information related to configuration of the cell target transmission;
update information related to configuration of the cell target transmission;
information related to feedback information of the first indication information;
parameter information corresponding to configuration of the cell target transmission;
usage indication information of a cell-specific information field.

In some embodiments, the cell-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the target transmission of the cell;
indication information related to configuration of the cell target transmission;
update information related to configuration of the cell target transmission;
information related to feedback information of the first indication information;
parameter information corresponding to configuration of the cell target transmission.

In some embodiments, the parameter information includes at least one of the following:
transmission period, duration of an active period, duration of an inactive period, starting time of the active period, end time of the active period, starting time of the inactive period, end time of the inactive period.

In some embodiments, the first indication information field satisfies at least one of the following:
being a newly added information field in the first signaling;
being a redefinition of a target information field in the first signaling.

In some embodiments, when the first indication information field is a redefinition of the target information field in the first signaling, the first signaling includes at least one of the following:
downlink control information DCI format 2_6, DCI format 0_0, DCI format 0_1, DCI format 0_2, DCI format 1_0, DCI format 1_1, DCI format 1_2.

In some embodiments, the implementation of receiving the first signaling includes:
obtaining a first resource through a second mode;
receiving the first signaling on the first resource;
where the second mode includes at least one of the following:
   pre-configuration, protocol agreement, and indication in downlink signaling.

In some embodiments, when the second mode includes pre-configuration, the first resource is pre-configured on a first receiving cell;
Where the first receiving cell includes at least one of the following:
a primary cell;
a secondary cell.

In some embodiments, the first receiving cell belongs to a cell in a cell group configured by the network device.

In some embodiments, the cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, when the first resource is pre-configured based on a BWP, the BWP for transmitting the first indication information includes: at least one BWP supported by a cell.

In some embodiments, the at least one BWP includes at least one of the following:
BWP dedicated to target transmission;
BWP dedicated to network energy saving;
non-initial BWP;
non-dormant BWP;
other BWPs in the configured cell with exception of any of the following: the BWP dedicated to target transmission, the BWP dedicated to network energy saving, the non-initial BWP and the non-dormant BWP.

In some embodiments, when the second mode includes a protocol agreement, the first resource satisfies at least one of the following: located within an active period of C-DRX of the UE; located outside an active period of the C-DRX of the UE; located within an active period of the cell target transmission; located outside an active period of the cell target transmission.

In some embodiments, when the second mode includes pre-configuration, the first resource satisfies at least one of the following:
having an association relationship with a target reference signal; having an association relationship with a target data transmission channel; having an association relationship with a target control channel.

In some embodiments, when the second mode includes indication in downlink signaling, the downlink signaling is used to indicate one or more of a plurality of resource parameter configurations configured by the network device.

In some embodiments, the first target cell includes at least one of the following:
primary Cell;
at least one target secondary cell;
at least one cell in at least one target cell group.

In some embodiments, the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, the device further includes:
a second obtaining unit used to obtain the first target cell through a third mode;
where the third mode includes at least one of the following:
   agreement;
   pre-configuration;
   indicating through first indication information.

In some embodiments, the device further includes:
a second transmission unit used to transmit feedback information of the first indication information to the network device.

In some embodiments, the feedback information includes at least one of the following:
hybrid automatic repeat request acknowledgement (HARQ-ACK) feedback information;
MAC layer reception confirmation information.

In some embodiments, the second transmission unit is used to:
obtain a second resource through a fourth mode;
transmit feedback information to the network device on the second resource;
where the fourth mode includes at least one of the following:
   higher layer signaling configuration, protocol agreement, indication in downlink signaling.

In some embodiments, the device further includes:
an execution unit used to perform a first operation according to the first indication information;
where the first operation includes at least one of the following:
   activating a cell target transmission of a first target cell at a target time;
   deactivating a cell target transmission of a first target cell at a target time;
   adjusting a cell target transmission of a first target cell at the target time;
   starting or ending an active period of a cell target transmission of a first target cell at a target time;
   starting or ending an inactive period of a cell target transmission of a first target cell at a target time;

In some embodiments, the target time is determined by at least one of the following:
time of receiving the first indication information;
reception time of the first indication information plus a preconfigured offset value;
reception time of the first indication information and subcarrier spacing of the first target cell;
transmission time of feedback information corresponding to the first indication information;
transmission time of feedback information corresponding to the first indication information plus a preconfigured offset value;
transmission time of feedback information corresponding to the first indication information and subcarrier spacing of the first target cell.

It is to be noted that the device embodiment is a device that corresponds one-to-one to the above method embodiment. All implementations in the above method embodiment are applicable to the device embodiment and can achieve the same technical effect.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

As shown in FIG. 10, one embodiment of the present disclosure further provides a user equipment (UE), including a processor 1000, a transceiver 1010, a memory 1020, and a program stored in the memory 1020 and executable on the processor 1000. The transceiver 1010 is connected to the processor 1000 and the memory 1020 through a bus interface. The processor 1000 is used to read the program in the memory and execute the following process:
receiving first indication information through the transceiver; where the first indication information is used to indicate a cell target transmission of a first target cell;
where the cell target transmission includes at least one of the following: cell DRX and cell DTX.

The transceiver 1010 is used to receive and send data under the control of the processor 1000.

In FIG. 10, a bus architecture may include any number of interconnected bus and bridge. Specifically, various circuits of one or more processors, which are represented by the processor 1000, and one or more memories, which are represented by the memory 1020, are linked together. The bus architecture may link various other circuits, such as a peripheral device, voltage regulator and a power management circuit together. These features are well known in this field; therefore, this disclosure does not make further description on these features. The bus interface provides an interface. The transceiver 1010 may be multiple elements, including a transmitter and a receiver and provide units, which communicate with other devices on the transmission medium. The transmission medium includes radio channels, wired channels, optical cables, etc. For different UEs, a user interface 1030 may be an interface that can be connected to external or internal devices. The connected devices include but are not limited to a small keyboard, a display, a speaker, a microphone, a joystick, etc.

The processor 1000 is responsible for managing the bus architecture and the normal processing. The memory 1020 may be used to store data used by the processor 1000 for performing operations.

The processor 1000 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the processor is used to read the computer program in the memory and perform the following operations:
receiving a first signaling; where the first signaling carries the first indication information;
obtaining the first indication information in the first signaling;
where the first signaling includes at least one of the following:
   layer 1 signaling, MAC layer signaling, and RRC layer signaling.

In some embodiments, the first signaling belongs to at least one of the following:
group common signaling, UE-specific signaling.

In some embodiments, the scrambling code for the CRC of the layer 1 signaling of the group common signaling includes at least one of the following:
system information radio network temporary identifier (SI-RNTI), paging radio network temporary identifier (P-RNTI), paging early indication RNTI (PEI-RNTI), power saving radio network temporary identifier (PS-RNTI), slot format indication radio network temporary identifier (SFI-RNTI), cell radio network temporary identifier (C-RNTI), modulation and coding scheme C-RNTI (MCS-C-RNTI), configured scheduling radio network temporary identifier (CS-RNTI).

In some embodiments, the scrambling code for the CRC of the layer 1 signaling of the UE-specific signaling includes at least one of the following:
cell radio network temporary identifier (C-RNTI), modulation and coding scheme C-RNTI (MCS-C-RNTI), configured scheduling radio network temporary identifier (CS-RNTI).

In some embodiments, the layer 1 signaling includes at least one of the following:
a layer 1 signaling dedicated for network energy-saving;
a layer 1 signaling dedicated for the cell target transmission.

In some embodiments, a scrambling code for cyclic redundancy check (CRC) of the layer 1 signaling includes at least one of the following:
a radio network temporary identifier (RNTI) dedicated for the cell target transmission;
RNTI dedicated for network energy saving.

In some embodiments, the first indication information includes at least one of the following:
relevant information for activating and/or deactivating the cell target transmission of the first target cell;
transmission related information of the cell target transmission of the first target cell.

In some embodiments, the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

In some embodiments, the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

In some embodiments, the first signaling includes a first indication information field, and the first indication information field is used to carry the first indication information.

The processor is used to read the program in the memory and execute the following process:
obtaining, through a first mode, a position of the first indication information field in the first signaling;
where the first mode includes at least one of the following:
   configuration in high layer signaling;
   indication in broadcast signaling;
   indication in downlink signaling.

In some embodiments, when the first signaling belongs to group common signaling, the first indication information field includes at least one of the following: a common information field of at least one UE and a UE-specific information field.

In some embodiments, the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

In some embodiments, the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

In some embodiments, the UE-specific information field includes at least one of the following: a common information field of at least one cell and a cell-specific information field.

In some embodiments, when the first signaling belongs to UE-specific signaling, the first indication information field includes at least one of the following: a common information field of at least one cell and a cell-specific information field.

In some embodiments, the common information field of the at least one cell carries at least one of the following:
available time information of the cell target transmission;
starting time indication information of an active period of the cell target transmission;
end time indication information of an active period of the cell target transmission;
start time indication information of an inactive period of the cell target transmission;
end time indication information of an inactive period of the cell target transmission;
indication information related to configuration of the cell target transmission;
update information related to configuration of the cell target transmission;
information related to feedback information of the first indication information;
parameter information corresponding to configuration of the cell target transmission;
usage indication information of a cell-specific information field.

In some embodiments, the cell-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the target transmission of the cell;
indication information related to configuration of the cell target transmission;
update information related to configuration of the cell target transmission;
information related to feedback information of the first indication information;
parameter information corresponding to configuration of the cell target transmission.

In some embodiments, the parameter information includes at least one of the following:
transmission period, duration of an active period, duration of an inactive period, starting time of the active period, end time of the active period, starting time of the inactive period, end time of the inactive period.

In some embodiments, the first indication information field satisfies at least one of the following:
being a newly added information field in the first signaling;
being a redefinition of a target information field in the first signaling.

In some embodiments, when the first indication information field is a redefinition of the target information field in the first signaling, the first signaling includes at least one of the following:
downlink control information DCI format 2_6, DCI format 0_0, DCI format 0_1, DCI format 0_2, DCI format 1_0, DCI format 1_1, DCI format 1_2.

In some embodiments, the receiving the first signaling includes:
obtaining a first resource through a second mode;
receiving the first signaling on the first resource;
where the second mode includes at least one of the following:
   pre-configuration, protocol agreement, and indication in downlink signaling.

In some embodiments, when the second mode includes pre-configuration, the first resource is pre-configured on a first receiving cell;
Where the first receiving cell includes at least one of the following:
a primary cell;
a secondary cell.

In some embodiments, the first receiving cell belongs to a cell in a cell group configured by the network device.

In some embodiments, the cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, when the first resource is pre-configured based on a BWP, the BWP for transmitting the first indication information includes: at least one BWP supported by a cell.

In some embodiments, the at least one BWP includes at least one of the following:
BWP dedicated to target transmission;
BWP dedicated to network energy saving;
non-initial BWP;
non-dormant BWP;
other BWPs in the configured cell with exception of any of the following: the BWP dedicated to target transmission, the BWP dedicated to network energy saving, the non-initial BWP and the non-dormant BWP.

In some embodiments, when the second mode includes a protocol agreement, the first resource satisfies at least one of the following: located within an active period of C-DRX of the UE; located outside an active period of the C-DRX of the UE; located within an active period of the cell target transmission; located outside an active period of the cell target transmission.

In some embodiments, when the second mode includes pre-configuration, the first resource satisfies at least one of the following:
having an association relationship with a target reference signal; having an association relationship with a target data transmission channel; having an association relationship with a target control channel.

In some embodiments, when the second mode includes indication in downlink signaling, the downlink signaling is used to indicate one or more of a plurality of resource parameter configurations configured by the network device.

In some embodiments, the first target cell includes at least one of the following:
primary Cell;
at least one target secondary cell;
at least one cell in at least one target cell group.

In some embodiments, the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, the processor is used to read the program in the memory and execute the following process:
obtaining the first target cell through a third mode;
where the third mode includes at least one of the following:
   agreement;
   pre-configuration;
   indicating through first indication information.

In some embodiments, the processor is used to read the program in the memory and execute the following process:
transmitting feedback information of the first indication information to the network device.

In some embodiments, the feedback information includes at least one of the following:
hybrid automatic repeat request acknowledgement (HARQ-ACK) feedback information;
MAC layer reception confirmation information.

In some embodiments, the processor is used to read the program in the memory and execute the following process:
obtaining a second resource through a fourth mode;
transmitting feedback information to the network device on the second resource;
where the fourth mode includes at least one of the following:
   higher layer signaling configuration, protocol agreement, indication in downlink signaling.

In some embodiments, the processor is used to read the program in the memory and execute the following process:
performing a first operation according to the first indication information;
where the first operation includes at least one of the following:
   activating a cell target transmission of a first target cell at a target time;
   deactivating a cell target transmission of a first target cell at a target time;
   adjusting a cell target transmission of a first target cell at the target time;
   starting or ending an active period of a cell target transmission of a first target cell at a target time;
   starting or ending an inactive period of a cell target transmission of a first target cell at a target time;

In some embodiments, the target time is determined by at least one of the following:
time of receiving the first indication information;
reception time of the first indication information plus a preconfigured offset value;
reception time of the first indication information and subcarrier spacing of the first target cell;
transmission time of feedback information corresponding to the first indication information;
transmission time of feedback information corresponding to the first indication information plus a preconfigured offset value;
transmission time of feedback information corresponding to the first indication information and subcarrier spacing of the first target cell.

It is to be noted here that the above UE provided in the embodiment of the present disclosure can implement all the method steps implemented by the above method embodiment, and can achieve the same technical effect. The parts and beneficial effects of this embodiment that are the same as the method embodiment will not be described in detail here.

One embodiment of the present disclosure further provides a computer-readable storage medium, which stores a computer program, and the computer program is used to cause a processor to execute the information transmission method on the user equipment. The computer-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), nonvolatile memory (NAND FLASH), solid-state disk (Solid State Disk or Solid State Drive, SSD)), etc.

As shown in FIG. 11, one embodiment of the present disclosure provides an information transmission device 1100, which is applied to a network device, including:
a first transmission unit 1101 used to transmit first indication information; where the first indication information is used to indicate cell target transmission of a first target cell;
where the cell target transmission includes at least one of the following: cell discontinuous reception DRX and cell discontinuous transmission DTX.

In some embodiments, the first transmission unit 1101 is used to:
transmit a first signaling to a user equipment (UE); where the first signaling carries the first indication information.

The first signaling includes at least one of the following:
layer 1 signaling, media access control MAC layer signaling, and radio resource control RRC layer signaling.

In some embodiments, the first signaling belongs to at least one of the following:
group common signaling, UE-specific signaling.

In some embodiments, the scrambling code for the CRC of the layer 1 signaling of the group common signaling includes at least one of the following:

system information radio network temporary identifier (SI-RNTI), paging radio network temporary identifier (P-RNTI), paging early indication RNTI (PEI-RNTI), power saving radio network temporary identifier (PS-RNTI), slot format indication radio network temporary identifier (SFI-RNTI), cell radio network temporary identifier (C-RNTI), modulation and coding scheme C-RNTI (MCS-C-RNTI), configured scheduling radio network temporary identifier (CS-RNTI).

In some embodiments, the scrambling code for the CRC of the layer 1 signaling of the UE-specific signaling includes at least one of the following:
cell radio network temporary identifier (C-RNTI), modulation and coding scheme C-RNTI (MCS-C-RNTI), configured scheduling radio network temporary identifier (CS-RNTI).

In some embodiments, the layer 1 signaling includes at least one of the following:
a layer 1 signaling dedicated for network energy-saving;
a layer 1 signaling dedicated for the cell target transmission.

In some embodiments, a scrambling code for cyclic redundancy check (CRC) of the layer 1 signaling includes at least one of the following:
a radio network temporary identifier (RNTI) dedicated for the cell target transmission;
RNTI dedicated for network energy saving.

In some embodiments, the first indication information includes at least one of the following:
relevant information for activating and/or deactivating the cell target transmission of the first target cell;
transmission related information of the cell target transmission of the first target cell.

In some embodiments, the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

In some embodiments, the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

In some embodiments, the first signaling includes a first indication information field, and the first indication information field is used to carry the first indication information.

The device is further used to:
transmit, through a first mode, a position of the first indication information field in the first signaling, to the UE;
where the first mode includes at least one of the following:
   configuration in high layer signaling;
   indication in broadcast signaling;
   indication in downlink signaling.

In some embodiments, when the first signaling belongs to group common signaling, the first indication information field includes at least one of the following: a common information field of at least one UE and a UE-specific information field.

In some embodiments, the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

In some embodiments, the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

In some embodiments, the UE-specific information field includes at least one of the following: a common information field of at least one cell and a cell-specific information field.

In some embodiments, when the first signaling belongs to UE-specific signaling, the first indication information field includes at least one of the following: a common information field of at least one cell and a cell-specific information field.

In some embodiments, the common information field of the at least one cell carries at least one of the following:
available time information of the cell target transmission;
starting time indication information of an active period of the cell target transmission;
end time indication information of an active period of the cell target transmission;
start time indication information of an inactive period of the cell target transmission;
end time indication information of an inactive period of the cell target transmission;
indication information related to configuration of the cell target transmission;
update information related to configuration of the cell target transmission;
information related to feedback information of the first indication information;
parameter information corresponding to configuration of the cell target transmission;
usage indication information of a cell-specific information field.

In some embodiments, the cell-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the target transmission of the cell;
indication information related to configuration of the cell target transmission;
update information related to configuration of the cell target transmission;
information related to feedback information of the first indication information;
parameter information corresponding to configuration of the cell target transmission.

In some embodiments, the parameter information includes at least one of the following:
transmission period, duration of an active period, duration of an inactive period, starting time of the active period, end time of the active period, starting time of the inactive period, end time of the inactive period.

In some embodiments, the first indication information field satisfies at least one of the following:
being a newly added information field in the first signaling;
being a redefinition of a target information field in the first signaling.

In some embodiments, when the first indication information field is a redefinition of the target information field in the first signaling, the first signaling includes at least one of the following:
downlink control information DCI format 2_6, DCI format 0_0, DCI format 0_1, DCI format 0_2, DCI format 1_0, DCI format 1_1, DCI format 1_2.

In some embodiments, the device further includes:
a first indication unit used to indicate, through a fifth mode, to the UE, a first resource for transmitting the first signaling;
where the fifth mode includes at least one of the following:
   pre-configuration, indication in downlink signaling.

In some embodiments, when the fifth mode includes pre-configuration, the first resource is pre-configured on a first receiving cell;
where the first receiving cell includes at least one of the following:
a primary cell;
a secondary cell.

In some embodiments, the first receiving cell belongs to a cell in a cell group configured by the network device.

In some embodiments, the cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, when the first resource is pre-configured based on a BWP, the BWP for transmitting the first indication information includes: at least one BWP supported by a cell.

In some embodiments, the at least one BWP includes at least one of the following:
BWP dedicated to target transmission;
BWP dedicated to network energy saving;
non-initial BWP;
non-dormant BWP;
other BWPs in the configured cell with exception of any of the following: the BWP dedicated to target transmission, the BWP dedicated to network energy saving, the non-initial BWP and the non-dormant BWP.

In some embodiments, when the fifth mode includes pre-configuration, the first resource satisfies at least one of the following:
having an association relationship with a target reference signal; having an association relationship with a target data transmission channel; having an association relationship with a target control channel.

In some embodiments, when the fifth mode includes indication in downlink signaling, the downlink signaling is used to indicate one or more of a plurality of resource parameter configurations configured by the network device.

In some embodiments, the first target cell includes at least one of the following:
primary Cell;
at least one target secondary cell;
at least one cell in at least one target cell group.

In some embodiments, the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, the device further includes:
a third transmission unit used to transmit the first target cell to the UE through a sixth mode;
where the sixth mode includes at least one of the following:
   pre-configuration;
   indicating through first indication information.

In some embodiments, the device further includes:
a second receiving unit used to receive feedback information of the first indication information transmitted by the UE.

In some embodiments, the feedback information includes at least one of the following:
hybrid automatic repeat request acknowledgement (HARQ-ACK) feedback information;
MAC layer reception confirmation information.

In some embodiments, the device further includes at least one of the following:
a second indication unit used to indicate, through configuration in high layer signaling, to the UE, a second resource for transmitting feedback information;
a third indication unit used to indicate, through indication in downlink signaling, to the UE, a second resource for feedback information.

It is to be noted that the device embodiment is a device that corresponds one-to-one to the above method embodiment. All implementations in the above method embodiment are applicable to the device embodiment and can achieve the same technical effect.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

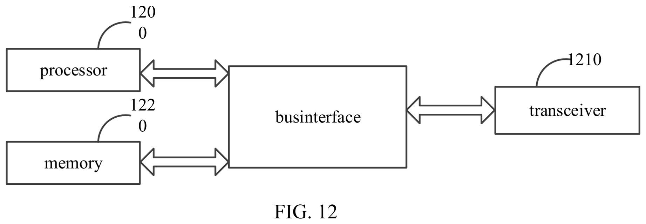

As shown in FIG. 12, one embodiment of the present disclosure further provides a network device, including a processor 1200, a transceiver 1210, a memory 1220, and a program stored in the memory 1220 and executable on the processor 1200. The transceiver 1210 is connected to the processor 1200 and the memory 1220 through a bus interface. The processor 1200 is used to read the program in the memory and execute the following process:
transmitting first indication information through the transceiver; where the first indication information is used to indicate cell target transmission of a first target cell;
where the cell target transmission includes at least one of the following: cell discontinuous reception DRX and cell discontinuous transmission DTX.

The transceiver 1210 is used to receive and send data under the control of the processor 1200.

In FIG. 12, a bus architecture may include any number of interconnected bus and bridge. Specifically, various circuits of one or more processors, which are represented by the processor 1200, and one or more memories, which are represented by the memory 1220, are linked together. The bus architecture may link various other circuits, such as a peripheral device, voltage regulator and a power management circuit together. These features are well known in this field; therefore, this disclosure does not make further description on these features. The bus interface provides an interface. The transceiver 1210 may be multiple elements, including a transmitter and a receiver and provide units, which communicate with other devices on the transmission medium. The transmission medium includes radio channels, wired channels, optical cables, etc. For different UEs, a user interface 1230 may be an interface that can be connected to external or internal devices. The connected devices include but are not limited to a small keyboard, a display, a speaker, a microphone, a joystick, etc.

The processor 1200 is responsible for managing the bus architecture and the normal processing. The memory 1220 may be used to store data used by the processor 1200 for performing operations.

In some embodiments, the processor 1200 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the processor is used to read the computer program in the memory and perform the following operations:
transmitting a first signaling to a user equipment (UE); where the first signaling carries the first indication information.

The first signaling includes at least one of the following:
layer 1 signaling, media access control MAC layer signaling, and radio resource control RRC layer signaling.

In some embodiments, the first signaling belongs to at least one of the following:
group common signaling, UE-specific signaling.

In some embodiments, the scrambling code for the CRC of the layer 1 signaling of the group common signaling includes at least one of the following:
system information radio network temporary identifier (SI-RNTI), paging radio network temporary identifier (P-RNTI), paging early indication RNTI (PEI-RNTI), power saving radio network temporary identifier (PS-RNTI), slot format indication radio network temporary identifier (SFI-RNTI), cell radio network temporary identifier (C-RNTI), modulation and coding scheme C-RNTI (MCS-C-RNTI), configured scheduling radio network temporary identifier (CS-RNTI).

In some embodiments, the scrambling code for the CRC of the layer 1 signaling of the UE-specific signaling includes at least one of the following:
cell radio network temporary identifier (C-RNTI), modulation and coding scheme C-RNTI (MCS-C-RNTI), configured scheduling radio network temporary identifier (CS-RNTI).

In some embodiments, the layer 1 signaling includes at least one of the following:
a layer 1 signaling dedicated for network energy-saving;
a layer 1 signaling dedicated for the cell target transmission.

In some embodiments, a scrambling code for cyclic redundancy check (CRC) of the layer 1 signaling includes at least one of the following:
a radio network temporary identifier (RNTI) dedicated for the cell target transmission;
RNTI dedicated for network energy saving.

In some embodiments, the first indication information includes at least one of the following:
relevant information for activating and/or deactivating the cell target transmission of the first target cell;
transmission related information of the cell target transmission of the first target cell.

In some embodiments, the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

In some embodiments, the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

In some embodiments, the first signaling includes a first indication information field, and the first indication information field is used to carry the first indication information.

The processor is used to read the program in the memory and execute the following process:
transmitting, through a first mode, a position of the first indication information field in the first signaling, to the UE;
where the first mode includes at least one of the following:
   configuration in high layer signaling;
   indication in broadcast signaling;
   indication in downlink signaling.

In some embodiments, when the first signaling belongs to group common signaling, the first indication information field includes at least one of the following: a common information field of at least one UE and a UE-specific information field.

In some embodiments, the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

In some embodiments, the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

In some embodiments, the UE-specific information field includes at least one of the following: a common information field of at least one cell and a cell-specific information field.

In some embodiments, when the first signaling belongs to UE-specific signaling, the first indication information field includes at least one of the following: a common information field of at least one cell and a cell-specific information field.

In some embodiments, the common information field of the at least one cell carries at least one of the following:
available time information of the cell target transmission;
starting time indication information of an active period of the cell target transmission;
end time indication information of an active period of the cell target transmission;
start time indication information of an inactive period of the cell target transmission;
end time indication information of an inactive period of the cell target transmission;
indication information related to configuration of the cell target transmission;
update information related to configuration of the cell target transmission;
information related to feedback information of the first indication information;
parameter information corresponding to configuration of the cell target transmission;
usage indication information of a cell-specific information field.

In some embodiments, the cell-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the target transmission of the cell;
indication information related to configuration of the cell target transmission;
update information related to configuration of the cell target transmission;
information related to feedback information of the first indication information;
parameter information corresponding to configuration of the cell target transmission.

In some embodiments, the parameter information includes at least one of the following:
transmission period, duration of an active period, duration of an inactive period, starting time of the active period, end time of the active period, starting time of the inactive period, end time of the inactive period.

In some embodiments, the first indication information field satisfies at least one of the following:
being a newly added information field in the first signaling;
being a redefinition of a target information field in the first signaling.

In some embodiments, when the first indication information field is a redefinition of the target information field in the first signaling, the first signaling includes at least one of the following:
downlink control information DCI format 2_6, DCI format 0_0, DCI format 0_1, DCI format 0_2, DCI format 1_0, DCI format 1_1, DCI format 1_2.

In some embodiments, the processor is used to read the program in the memory and execute the following process:
indicating, through a fifth mode, to the UE, a first resource for transmitting the first signaling;
where the fifth mode includes at least one of the following:
   pre-configuration, indication in downlink signaling.

In some embodiments, when the fifth mode includes pre-configuration, the first resource is pre-configured on a first receiving cell;
where the first receiving cell includes at least one of the following:
a primary cell;
a secondary cell.

In some embodiments, the first receiving cell belongs to a cell in a cell group configured by the network device.

In some embodiments, the cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, when the first resource is pre-configured based on a BWP, the BWP for transmitting the first indication information includes: at least one BWP supported by a cell.

In some embodiments, the at least one BWP includes at least one of the following:
BWP dedicated to target transmission;
BWP dedicated to network energy saving;
non-initial BWP;
non-dormant BWP;
other BWPs in the configured cell with exception of any of the following: the BWP dedicated to target transmission, the BWP dedicated to network energy saving, the non-initial BWP and the non-dormant BWP.

In some embodiments, when the fifth mode includes pre-configuration, the first resource satisfies at least one of the following:
having an association relationship with a target reference signal; having an association relationship with a target data transmission channel; having an association relationship with a target control channel.

In some embodiments, when the fifth mode includes indication in downlink signaling, the downlink signaling is used to indicate one or more of a plurality of resource parameter configurations configured by the network device.

In some embodiments, the first target cell includes at least one of the following:
primary Cell;
at least one target secondary cell;
at least one cell in at least one target cell group.

In some embodiments, the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

In some embodiments, the processor is used to read the program in the memory and execute the following process:
transmitting the first target cell to the UE through a sixth mode;
where the sixth mode includes at least one of the following:
   pre-configuration;
   indicating through first indication information.

In some embodiments, the processor is used to read the program in the memory and execute the following process:
receiving feedback information of the first indication information transmitted by the UE.

In some embodiments, the feedback information includes at least one of the following:
hybrid automatic repeat request acknowledgement (HARQ-ACK) feedback information;
MAC layer reception confirmation information.

In some embodiments, the processor is used to read the program in the memory and execute at least one of the following:
indicating, through configuration in high layer signaling, to the UE, a second resource for transmitting feedback information;
indicating, through indication in downlink signaling, to the UE, a second resource for feedback information.

It is to be noted here that the above network device provided in the embodiment of the present disclosure can implement all the method steps implemented by the above method embodiment, and can achieve the same technical effect. The parts and beneficial effects of this embodiment that are the same as the method embodiment will not be described in detail here.

One embodiment of the present disclosure further provides a computer-readable storage medium, which stores a computer program, and the computer program is used to cause a processor to execute the information transmission method on the network device. The computer-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), nonvolatile memory (NAND FLASH), solid-state disk (Solid State Disk or Solid State Drive, SSD)), etc.

A person skilled in the art should understand that the embodiments of the present application may be provided as methods, systems, or computer program products. Therefore, the present application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

The present is described with reference to flowcharts and/or block diagrams of methods, devices (systems), and computer program products according to the embodiments of the present application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. An information transmission method, performed by a user equipment (UE), comprising:
receiving first indication information; wherein the first indication information is used to indicate a cell target transmission of a first target cell;
wherein the cell target transmission includes at least one of the following: cell discontinuous reception (DRX) and cell discontinuous transmission (DTX).

2. The method according to claim 1, wherein the first indication information includes at least one of the following:
relevant information for activating and/or deactivating the cell target transmission of the first target cell; and
transmission related information of the cell target transmission of the first target cell.

3. The method according to claim 2, wherein the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission; and
end time indication information of an active period of the cell target transmission.

4. The method according to claim 2, wherein the transmission related information of the cell target transmission of the first target cell includes at least one of the following items:
indication information related to configuration of the cell target transmission;
update information related to configuration of the cell target transmission;
information related to feedback information of the first indication information; and
parameter information corresponding to configuration of the cell target transmission.

5. The method according to any one of claims 1 to 4, wherein the receiving first indication information, includes:
receiving a first signaling; wherein the first signaling carries the first indication information;
obtaining the first indication information in the first signaling;
wherein the first signaling includes at least one of the following:
layer 1 signaling, media access control (MAC) layer signaling, and radio resource control (RRC) layer signaling.

6. The method according to claim 5, wherein the first signaling belongs to at least one of the following:
group common signaling, and UE-specific signaling.

7. The method according to claim 6, wherein a scrambling code for cyclic redundancy check (CRC) of the layer 1 signaling of the group common signaling includes at least one of the following:
system information radio network temporary identifier (SI-RNTI), paging radio network temporary identifier (P-RNTI), paging early indication RNTI (PEI-RNTI), power saving radio network temporary identifier (PS-RNTI), slot format indication radio network temporary identifier (SFI-RNTI), cell radio network temporary identifier (C-RNTI), modulation and coding scheme C-RNTI (MCS-C-RNTI), configured scheduling radio network temporary identifier (CS-RNTI).

8. The method according to claim 6, wherein a scrambling code for CRC of the layer 1 signaling of the UE-specific signaling includes at least one of the following:
cell radio network temporary identifier (C-RNTI), modulation and coding scheme C-RNTI (MCS-C-RNTI), configured scheduling radio network temporary identifier (CS-RNTI).

9. The method according to any one of claims 5 to 8, wherein the layer 1 signaling includes at least one of the following:
a layer 1 signaling dedicated for network energy-saving;
a layer 1 signaling dedicated for the cell target transmission.

10. The method according to any one of claims 5 to 9, wherein a scrambling code for CRC of the layer 1 signaling includes at least one of the following:
a radio network temporary identifier (RNTI) dedicated for the cell target transmission;
RNTI dedicated for network energy saving.

11. The method according to any one of claims 5 to 10, wherein the first signaling includes a first indication information field, and the first indication information field is used to carry the first indication information;
the method further includes:
transmitting, through a first mode, a position of the first indication information field in the first signaling, to the UE;
wherein the first mode includes at least one of the following:
configuration in high layer signaling;
indication in broadcast signaling;
indication in downlink signaling.

12. The method according to claim 11, wherein when the first signaling belongs to group common signaling, the first indication information field includes at least one of the following: a common information field of at least one UE and a UE-specific information field.

13. The method according to claim 12, wherein the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission; and
usage indication information of a UE-specific information field.

14. The method according to claim 12, wherein the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information; and
parameter information corresponding to configuration of the cell target transmission.

15. The method according to claim 13, wherein the UE-specific information field includes at least one of the following: a common information field of at least one cell and a cell-specific information field.

16. The method according to claim 12, wherein when the first signaling belongs to UE-specific signaling, the first indication information field includes at least one of the following: a common information field of at least one cell and a cell-specific information field.

17. The method according to claim 15 or 16, wherein the common information field of the at least one cell carries at least one of the following:
available time information of the cell target transmission;
starting time indication information of an active period of the cell target transmission;
end time indication information of an active period of the cell target transmission;
start time indication information of an inactive period of the cell target transmission;
end time indication information of an inactive period of the cell target transmission;
indication information related to configuration of the cell target transmission;
update information related to configuration of the cell target transmission;
information related to feedback information of the first indication information;
parameter information corresponding to configuration of the cell target transmission; and
usage indication information of a cell-specific information field.

18. The method according to claim 15 or 16, wherein the cell-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the target transmission of the cell;
indication information related to configuration of the cell target transmission;
update information related to configuration of the cell target transmission;
information related to feedback information of the first indication information; and
parameter information corresponding to configuration of the cell target transmission.

19. The method according to claim 4, 14, 17 or 18, wherein the parameter information includes at least one of the following:
transmission period, duration of an active period, duration of an inactive period, starting time of the active period, end time of the active period, starting time of the inactive period, end time of the inactive period.

20. The method according to claim 11, wherein the first indication information field satisfies at least one of the following:
being a newly added information field in the first signaling;
being a redefinition of a target information field in the first signaling.

21. The method according to claim 20, wherein when the first indication information field is a redefinition of the target information field in the first signaling, the first signaling includes at least one of the following:
downlink control information DCI format 2_6, DCI format 0_0, DCI format 0_1, DCI format 0_2, DCI format 1_0, DCI format 1_1, DCI format 1_2.

22. The method according to claim 5, wherein the receiving the first signaling, includes:
obtaining a first resource through a second mode;
receiving, on the first resource, the first signaling;
wherein the second mode includes at least one of the following:
pre-configuration, protocol agreement, and indication in downlink signaling.

23. The method according to claim 22, wherein when the second mode includes pre-configuration, the first resource is preconfigured on a first receiving cell;
the first receiving cell includes at least one of the following:
a primary cell;
a secondary cell.

24. The method according to claim 23, wherein the first receiving cell is a cell belonging to a cell group configured by the network device.

25. The method according to claim 24, wherein the cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

26. The method according to claim 24, wherein when the first resource is pre-configured based on a bandwidth part (BWP), the BWP for transmitting the first indication information includes: at least one BWP supported by a cell.

27. The method according to claim 26, wherein the at least one BWP includes at least one of the following:
BWP dedicated to a target transmission;
BWP dedicated to network energy saving;
non-initial BWP;
non-dormant BWP;
other BWPs in the configured cell with exception of any of the following: the BWP dedicated to target transmission, the BWP dedicated to network energy saving, the non-initial BWP and the non-dormant BWP.

28. The method according to claim 22, wherein when the second mode includes a protocol agreement, the first resource satisfies at least one of the following: located within an active period of C-DRX of the UE; located outside an active period of the C-DRX of the UE; located within an active period of the cell target transmission; located outside an active period of the cell target transmission.

29. The method according to claim 22, wherein when the second mode includes pre-configuration, the first resource satisfies at least one of the following:
having an association relationship with a target reference signal, having an association relationship with a target data transmission channel, and having an association relationship with a target control channel.

30. The method according to claim 22, wherein when the second mode includes indication in downlink signaling, the downlink signaling is used to indicate one or more of a plurality of resource parameter configurations configured by the network device.

31. The method according to claim 1, wherein the first target cell includes at least one of the following:
a primary Cell;
at least one target secondary cell;
at least one cell in at least one target cell group.

32. The method according to claim 31, wherein the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

33. The method according to claim 31, wherein the method further includes:
obtaining a first target cell in a third mode;
wherein the third mode includes at least one of the following:
agreement;
pre-configuration;
indicating through first indication information.

34. The method according to any one of claims 1 to 33, wherein the method further includes:
transmitting feedback information of the first indication information to the network device.

35. The method according to claim 34, wherein the feedback information includes at least one of the following:
hybrid automatic repeat request acknowledgement (HARQ-ACK) feedback information;
MAC layer reception confirmation information.

36. The method according to claim 34, wherein the transmitting the feedback information of the first indication information to the network device includes:
obtaining a second resource through a fourth mode;
transmitting feedback information to the network device through the second resource;
wherein the fourth mode includes at least one of the following:
configuration in high layer signaling, protocol agreement, and indication in downlink signaling.

37. The method according to claim 1, wherein the method further includes:
performing a first operation based on the first indication information;
wherein the first operation includes at least one of the following:
activating a cell target transmission of a first target cell at a target time;
deactivating a cell target transmission of a first target cell at a target time;
adjusting a cell target transmission of a first target cell at the target time;
starting or ending an active period of a cell target transmission of a first target cell at a target time; and
starting or ending an inactive period of a cell target transmission of a first target cell at a target time.

38. The method according to claim 37, wherein the target time is determined by at least one of the following:
time of receiving the first indication information;
reception time of the first indication information plus a preconfigured offset value;
reception time of the first indication information and subcarrier spacing of the first target cell;
transmission time of feedback information corresponding to the first indication information;
transmission time of feedback information corresponding to the first indication information plus a preconfigured offset value; and
transmission time of feedback information corresponding to the first indication information and subcarrier spacing of the first target cell.

39. An information transmission method, performed by a network device, comprising:
transmitting first indication information; wherein the first indication information is used to indicate cell target transmission of a first target cell;
wherein the cell target transmission includes at least one of the following: cell discontinuous reception DRX and cell discontinuous transmission DTX.

40. The method according to claim 39, wherein the first indication information includes at least one of the following:
relevant information for activating and/or deactivating the cell target transmission of the first target cell;
transmission related information of the cell target transmission of the first target cell.

41. The method according to claim 40, wherein the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

42. The method according to claim 40, wherein the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

43. The method according to any one of claims 39 to 42, wherein the transmitting first indication information includes:
transmitting a first signaling to a user equipment (UE); wherein the first signaling carries the first indication information;
wherein the first signaling includes at least one of the following:
layer 1 signaling, media access control MAC layer signaling, and radio resource control RRC layer signaling.

44. The method according to claim 43, wherein the first signaling belongs to at least one of the following:
group common signaling, UE-specific signaling.

45. The method according to claim 44, wherein a scrambling code for CRC of the layer 1 signaling of the group common signaling includes at least one of the following:
system information radio network temporary identifier (SI-RNTI), paging radio network temporary identifier (P-RNTI), paging early indication RNTI (PEI-RNTI), power saving radio network temporary identifier (PS-RNTI), slot format indication radio network temporary identifier (SFI-RNTI), cell radio network temporary identifier (C-RNTI), modulation and coding scheme C-RNTI (MCS-C-RNTI), configured scheduling radio network temporary identifier (CS-RNTI).

46. The method according to claim 44, wherein a scrambling code for CRC of the layer 1 signaling of the UE-specific signaling includes at least one of the following:
cell radio network temporary identifier (C-RNTI), modulation and coding scheme C-RNTI (MCS-C-RNTI), configured scheduling radio network temporary identifier (CS-RNTI).

47. The method according to any one of claims 43 to 46, wherein the layer 1 signaling includes at least one of the following:
a layer 1 signaling dedicated for network energy-saving;
a layer 1 signaling dedicated for the cell target transmission.

48. The method according to any one of claims 43 to 46, wherein a scrambling code for cyclic redundancy check (CRC) of the layer 1 signaling includes at least one of the following:
a radio network temporary identifier (RNTI) dedicated for the cell target transmission;
RNTI dedicated for network energy saving.

49. The method according to any one of claims 43 to 48, wherein the first signaling includes a first indication information field, and the first indication information field is used to carry the first indication information;
the method further includes:
transmitting, through a first mode, a position of the first indication information field in the first signaling, to the UE;
wherein the first mode includes at least one of the following:
configuration in high layer signaling;
indication in broadcast signaling;
indication in downlink signaling.

50. The method according to claim 49, wherein when the first signaling belongs to group common signaling, the first indication information field includes at least one of the following: a common information field of at least one UE and a UE-specific information field.

51. The method according to claim 50, wherein the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

52. The method according to claim 50, wherein the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

53. The method according to claim 51, wherein the UE-specific information field includes at least one of the following: a common information field of at least one cell and a cell-specific information field.

54. The method according to claim 50, wherein when the first signaling belongs to UE-specific signaling, the first indication information field includes at least one of the following: a common information field of at least one cell and a cell-specific information field.

55. The method according to claim 53 or 54, wherein the common information field of the at least one cell carries at least one of the following:
available time information of the cell target transmission;
starting time indication information of an active period of the cell target transmission;
end time indication information of an active period of the cell target transmission;
start time indication information of an inactive period of the cell target transmission;
end time indication information of an inactive period of the cell target transmission;
indication information related to configuration of the cell target transmission;
update information related to configuration of the cell target transmission;
information related to feedback information of the first indication information;
parameter information corresponding to configuration of the cell target transmission;
usage indication information of a cell-specific information field.

56. The method according to claim 53 or 54, wherein the cell-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the target transmission of the cell;
indication information related to configuration of the cell target transmission;
update information related to configuration of the cell target transmission;
information related to feedback information of the first indication information;
parameter information corresponding to configuration of the cell target transmission.

57. The method according to claim 42, 52, 55 or 56, wherein the parameter information includes at least one of the following:
transmission period, duration of an active period, duration of an inactive period, starting time of the active period, end time of the active period, starting time of the inactive period, end time of the inactive period.

58. The method according to claim 49, wherein the first indication information field satisfies at least one of the following:
being a newly added information field in the first signaling;
being a redefinition of a target information field in the first signaling.

59. The method according to claim 58, wherein when the first indication information field is a redefinition of the target information field in the first signaling, the first signaling includes at least one of the following:
downlink control information DCI format 2_6, DCI format 0_0, DCI format 0_1, DCI format 0_2, DCI format 1_0, DCI format 1_1, DCI format 1_2.

60. The method according to any one of claims 40 to 59, wherein the method further includes:
indicating, through a fifth mode, to the UE, a first resource for transmitting the first signaling;
wherein the fifth mode includes at least one of the following:
pre-configuration, indication in downlink signaling.

61. The method according to claim 60, wherein when the fifth mode includes pre-configuration, the first resource is pre-configured on a first receiving cell;
where the first receiving cell includes at least one of the following:
a primary cell;
a secondary cell.

62. The method according to claim 61, wherein the first receiving cell belongs to a cell in a cell group configured by the network device.

63. The method according to claim 62, wherein the cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

64. The method according to claim 60, wherein when the first resource is pre-configured based on a BWP, the BWP for transmitting the first indication information includes: at least one BWP supported by a cell.

65. The method according to claim 64, wherein the at least one BWP includes at least one of the following:
BWP dedicated to target transmission;
BWP dedicated to network energy saving;
non-initial BWP;
non-dormant BWP;
other BWPs in the configured cell with exception of any of the following: the BWP dedicated to target transmission, the BWP dedicated to network energy saving, the non-initial BWP and the non-dormant BWP.

66. The method according to claim 60, wherein when the fifth mode includes pre-configuration, the first resource satisfies at least one of the following:
having an association relationship with a target reference signal; having an association relationship with a target data transmission channel; having an association relationship with a target control channel.

67. The method according to claim 60, wherein when the fifth mode includes indication in downlink signaling, the downlink signaling is used to indicate one or more of a plurality of resource parameter configurations configured by the network device.

68. The method according to claim 39, wherein the first target cell includes at least one of the following:
a primary Cell;
at least one target secondary cell;
at least one cell in at least one target cell group.

69. The method according to claim 68, wherein the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

70. The method according to claim 69, wherein the method further includes:
transmitting the first target cell to the UE through a sixth mode;
wherein the sixth mode includes at least one of the following:
pre-configuration;
indicating through first indication information.

71. The method according to any one of claims 39 to 70, wherein the method further includes:
receiving feedback information of the first indication information transmitted by the UE.

72. The method according to claim 71, wherein the feedback information includes at least one of the following:
hybrid automatic repeat request acknowledgement (HARQ-ACK) feedback information;
MAC layer reception confirmation information.

73. The method according to claim 71, wherein the method further includes at least one of the following:
indicating, through configuration in high layer signaling, to the UE, a second resource for transmitting feedback information;
indicating, through indication in downlink signaling, to the UE, a second resource for feedback information.

74. A user equipment (UE), comprising: a memory, a transceiver, and a processor; wherein the memory is used to store a computer program; the transceiver is used to transmit and receive data under the control of the processor; and the processor is used to read the computer program in the memory and perform the following operations:
receiving first indication information through the transceiver; wherein the first indication information is used to indicate a cell target transmission of a first target cell;
wherein the cell target transmission includes at least one of the following: cell DRX and cell DTX.

75. The UE according to claim 74, wherein the first indication information includes at least one of the following:
relevant information for activating and/or deactivating the cell target transmission of the first target cell;
transmission related information of the cell target transmission of the first target cell.

76. The UE according to claim 75, wherein the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

77. The UE according to claim 75, wherein the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

78. The UE according to claim 74 or 75, wherein the processor is used to read the computer program in the memory and perform the following operations:
receiving first signaling; wherein the first signaling carries the first indication information;
obtaining the first indication information in the first signaling;
wherein the first signaling includes at least one of the following:
layer 1 signaling, MAC layer signaling, and RRC layer signaling.

79. The UE according to claim 78, wherein the first signaling includes a first indication information field, and the first indication information field is used to carry the first indication information;
the processor is used to read the computer program in the memory and perform the following operations:
obtaining, through a first mode, a position of the first indication information field in the first signaling, to the UE;
wherein the first mode includes at least one of the following:
configuration in high layer signaling;
indication in broadcast signaling;
indication in downlink signaling.

80. The UE according to claim 79, wherein when the first signaling belongs to group common signaling, the first indication information field includes at least one of the following: a common information field of at least one UE and a UE-specific information field.

81. The UE according to claim 80, wherein the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

82. The UE according to claim 80, wherein the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

83. The UE according to claim 78, wherein the processor is used to read the computer program in the memory and perform the following operations:
obtaining a first resource through a second mode;
receiving, on the first resource, the first signaling;
wherein the second mode includes at least one of the following:
pre-configuration, protocol agreement, and indication in downlink signaling.

84. The UE according to claim 83, wherein when the second mode includes pre-configuration, the first resource is preconfigured on a first receiving cell;
the first receiving cell includes at least one of the following:
a primary cell;
a secondary cell.

85. The UE according to claim 83, wherein when the second mode includes a protocol agreement, the first resource satisfies at least one of the following: located within an active period of C-DRX of the UE; located outside an active period of the C-DRX of the UE; located within an active period of the cell target transmission; located outside an active period of the cell target transmission.

86. The UE according to claim 83, wherein when the second mode includes pre-configuration, the first resource satisfies at least one of the following:
having an association relationship with a target reference signal, having an association relationship with a target data transmission channel, and having an association relationship with a target control channel.

87. The UE according to claim 83, wherein when the second mode includes indication in downlink signaling, the downlink signaling is used to indicate one or more of a plurality of resource parameter configurations configured by the network device.

88. The UE according to claim 74, wherein the first target cell includes at least one of the following:
a primary Cell;
at least one target secondary cell;
at least one cell in at least one target cell group.

89. The UE according to claim 88, wherein the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

90. The UE according to claim 88, wherein the processor is used to read the computer program in the memory and perform the following operations:
obtaining a first target cell in a third mode;
wherein the third mode includes at least one of the following:
agreement;
pre-configuration;
indicating through first indication information.

91. The UE according to any one of claims 74 to 90, wherein the processor is used to read the computer program in the memory and perform the following operations:
transmitting feedback information of the first indication information to the network device.

92. The UE according to claim 91, wherein the feedback information includes at least one of the following:
hybrid automatic repeat request acknowledgement (HARQ-ACK) feedback information;
MAC layer reception confirmation information.

93. The UE according to claim 91, wherein the processor is used to read the computer program in the memory and perform the following operations:
obtaining a second resource through a fourth mode;
transmitting feedback information to the network device through the second resource;
wherein the fourth mode includes at least one of the following:
configuration in high layer signaling, protocol agreement, and indication in downlink signaling.

94. The UE according to claim 74, wherein the processor is used to read the computer program in the memory and perform the following operations:
performing a first operation based on the first indication information;
wherein the first operation includes at least one of the following:
activating a cell target transmission of a first target cell at a target time;
deactivating a cell target transmission of a first target cell at a target time;
adjusting a cell target transmission of a first target cell at the target time;
starting or ending an active period of a cell target transmission of a first target cell at a target time;
starting or ending an inactive period of a cell target transmission of a first target cell at a target time.

95. The UE according to claim 94, wherein the target time is determined by at least one of the following:
time of receiving the first indication information;
reception time of the first indication information plus a preconfigured offset value;
reception time of the first indication information and subcarrier spacing of the first target cell;
transmission time of feedback information corresponding to the first indication information;
transmission time of feedback information corresponding to the first indication information plus a preconfigured offset value;
transmission time of feedback information corresponding to the first indication information and subcarrier spacing of the first target cell.

96. A network device, comprising: a memory, a transceiver, and a processor;
wherein the memory is used to store a computer program; the transceiver is used to transmit and receive data under the control of the processor; and the processor is used to read the computer program in the memory and perform the following operations:
transmitting first indication information through the transceiver; wherein the first indication information is used to indicate cell target transmission of a first target cell;
wherein the cell target transmission includes at least one of the following: cell discontinuous reception DRX and cell discontinuous transmission DTX.

97. The network device according to claim 96, wherein the first indication information includes at least one of the following:
relevant information for activating and/or deactivating the cell target transmission of the first target cell;
transmission related information of the cell target transmission of the first target cell.

98. The network device according to claim 97, wherein the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

99. The network device according to claim 97, wherein the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

100. The network device according to claim 96 or 97, wherein the processor is used to read the computer program in the memory and perform the following operations:
transmitting a first signaling to a user equipment (UE); wherein the first signaling carries the first indication information;
wherein the first signaling includes at least one of the following:
layer 1 signaling, media access control MAC layer signaling, and radio resource control RRC layer signaling.

101. The network device according to claim 10, wherein the first signaling includes a first indication information field, and the first indication information field is used to carry the first indication information;
the processor is used to read the computer program in the memory and perform the following operations:
transmitting, through a first mode, a position of the first indication information field in the first signaling, to the UE;
wherein the first mode includes at least one of the following:
configuration in high layer signaling;
indication in broadcast signaling;
indication in downlink signaling.

102. The network device according to claim 101, wherein when the first signaling belongs to group common signaling, the first indication information field includes at least one of the following: a common information field of at least one UE and a UE-specific information field.

103. The network device according to claim 102, wherein the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

104. The network device according to claim 102, wherein the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

105. The network device according to any one of claims 97 to 104, wherein the processor is used to read the computer program in the memory and perform the following operations:
indicating, through a fifth mode, to the UE, a first resource for transmitting the first signaling;
wherein the fifth mode includes at least one of the following:
pre-configuration, indication in downlink signaling.

106. The network device according to claim 105, wherein when the fifth mode includes pre-configuration, the first resource is pre-configured on a first receiving cell;
where the first receiving cell includes at least one of the following:
a primary cell;
a secondary cell.

107. The network device according to claim 105, wherein when the fifth mode includes pre-configuration, the first resource satisfies at least one of the following:
having an association relationship with a target reference signal; having an association relationship with a target data transmission channel; having an association relationship with a target control channel.

108. The network device according to claim 105, wherein when the fifth mode includes indication in downlink signaling, the downlink signaling is used to indicate one or more of a plurality of resource parameter configurations configured by the network device.

109. The network device according to claim 96, wherein the first target cell includes at least one of the following:
a primary Cell;
at least one target secondary cell;
at least one cell in at least one target cell group.

110. The network device according to claim 109, wherein the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

111. The network device according to claim 110, wherein the processor is used to read the computer program in the memory and perform the following operations:
transmitting the first target cell to the UE through a sixth mode;
wherein the sixth mode includes at least one of the following:
pre-configuration;
indicating through first indication information.

112. The network device according to any one of claims 96 to 111, wherein the processor is used to read the computer program in the memory and perform the following operations:
receiving feedback information of the first indication information transmitted by the UE.

113. The network device according to claim 112, wherein the feedback information includes at least one of the following:
hybrid automatic repeat request acknowledgement (HARQ-ACK) feedback information;
MAC layer reception confirmation information.

114. The network device according to claim 112, wherein the method further includes at least one of the following:
indicating, through configuration in high layer signaling, to the UE, a second resource for transmitting feedback information;
indicating, through indication in downlink signaling, to the UE, a second resource for feedback information.

115. An information transmission device, applied to user equipment (UE), comprising:
a first receiving unit used to receive first indication information; wherein the first indication information is used to indicate a cell target transmission of a first target cell;
wherein the cell target transmission includes at least one of the following: cell DRX and cell DTX.

116. The device according to claim 115, wherein the first indication information includes at least one of the following:
relevant information for activating and/or deactivating the cell target transmission of the first target cell;
transmission related information of the cell target transmission of the first target cell.

117. The device according to claim 116, wherein the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

118. The device according to claim 116, wherein the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

119. The device according to claim 115 or 116, wherein the first receiving unit is used to, receive first signaling; wherein the first signaling carries the first indication information; obtain the first indication information in the first signaling;
wherein the first signaling includes at least one of the following:
layer 1 signaling, MAC layer signaling, and RRC layer signaling.

120. The device according to claim 119, wherein the first signaling includes a first indication information field, and the first indication information field is used to carry the first indication information;
the device further includes:
a first obtain unit used to obtain, through a first mode, a position of the first indication information field in the first signaling;
wherein the first mode includes at least one of the following:
configuration in high layer signaling;
indication in broadcast signaling;
indication in downlink signaling.

121. The device according to claim 120, wherein when the first signaling belongs to group common signaling, the first indication information field includes at least one of the following: a common information field of at least one UE and a UE-specific information field.

122. The device according to claim 121, wherein the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

123. The device according to claim 121, wherein the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

124. The device according to claim 119, wherein the receiving the first signaling includes:
obtaining a first resource through a second mode;
receiving, on the first resource, the first signaling;
wherein the second mode includes at least one of the following:
pre-configuration, protocol agreement, and indication in downlink signaling.

125. The device according to claim 124, wherein when the second mode includes pre-configuration, the first resource is preconfigured on a first receiving cell;
the first receiving cell includes at least one of the following:
a primary cell;
a secondary cell.

126. The device according to claim 124, wherein when the second mode includes a protocol agreement, the first resource satisfies at least one of the following: located within an active period of C-DRX of the UE; located outside an active period of the C-DRX of the UE; located within an active period of the cell target transmission; located outside an active period of the cell target transmission.

127. The device according to claim 124, wherein when the second mode includes pre-configuration, the first resource satisfies at least one of the following:
having an association relationship with a target reference signal, having an association relationship with a target data transmission channel, and having an association relationship with a target control channel.

128. The device according to claim 124, wherein when the second mode includes indication in downlink signaling, the downlink signaling is used to indicate one or more of a plurality of resource parameter configurations configured by the network device.

129. The device according to claim 115, wherein the first target cell includes at least one of the following:
a primary Cell;
at least one target secondary cell;
at least one cell in at least one target cell group.

130. The device according to claim 129, wherein the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

131. The device according to claim 129, wherein the device further includes:
a second obtaining unit used to obtain a first target cell in a third mode;
wherein the third mode includes at least one of the following:
agreement;
pre-configuration;
indicating through first indication information.

132. The device according to any one of claims 115 to 131, wherein the device further includes:
a second transmission unit used to transmit feedback information of the first indication information to the network device.

133. The device according to claim 132, wherein the feedback information includes at least one of the following:
hybrid automatic repeat request acknowledgement (HARQ-ACK) feedback information;
MAC layer reception confirmation information.

134. The device according to claim 132, wherein the second transmission unit is used to:
obtain a second resource through a fourth mode;
transmit feedback information to the network device through the second resource;
wherein the fourth mode includes at least one of the following:
configuration in high layer signaling, protocol agreement, and indication in downlink signaling.

135. The device according to claim 115, wherein the device further includes:
an execution unit used to perform a first operation based on the first indication information;
wherein the first operation includes at least one of the following:
activating a cell target transmission of a first target cell at a target time;
deactivating a cell target transmission of a first target cell at a target time;
adjusting a cell target transmission of a first target cell at the target time;
starting or ending an active period of a cell target transmission of a first target cell at a target time;
starting or ending an inactive period of a cell target transmission of a first target cell at a target time.

136. The device according to claim 135, wherein the target time is determined by at least one of the following:
time of receiving the first indication information;
reception time of the first indication information plus a preconfigured offset value;
reception time of the first indication information and subcarrier spacing of the first target cell;
transmission time of feedback information corresponding to the first indication information;
transmission time of feedback information corresponding to the first indication information plus a preconfigured offset value;
transmission time of feedback information corresponding to the first indication information and subcarrier spacing of the first target cell.

137. An information transmission device, applied to a network device, comprising:
a first transmission unit used to transmit first indication information; wherein the first indication information is used to indicate cell target transmission of a first target cell;
wherein the cell target transmission includes at least one of the following: cell discontinuous reception DRX and cell discontinuous transmission DTX.

138. The device according to claim 137, wherein the first indication information includes at least one of the following:
relevant information for activating and/or deactivating the cell target transmission of the first target cell;
transmission related information of the cell target transmission of the first target cell.

139. The device according to claim 138, wherein the relevant information for activating and/or deactivating the cell target transmission of the first target cell includes at least one of the following items:
indication information for activating the cell target transmission;
indication information for deactivating the cell target transmission;
available time information of the cell target transmission;
cell information corresponding to activated cell target transmission;
carrier information corresponding to activated cell target transmission;
cell information corresponding to deactivated cell target transmission;
carrier information corresponding to deactivated cell target transmission;
starting time indication information of an active period of the cell target transmission;
end time indication information of an active period of the cell target transmission;
starting time indication information of an active period of the cell target transmission;
end time indication information of an active period of the cell target transmission.

140. The device according to claim 138, wherein the transmission related information of the cell target transmission of the first target cell includes at least one of the following items:
indication information related to configuration of the cell target transmission;
update information related to configuration of the cell target transmission;
information related to feedback information of the first indication information;
parameter information corresponding to configuration of the cell target transmission.

141. The device according to claim 137 or 138, wherein the first transmission unit used to:
transmit a first signaling to a user equipment (UE); wherein the first signaling carries the first indication information;
wherein the first signaling includes at least one of the following:
layer 1 signaling, media access control MAC layer signaling, and radio resource control RRC layer signaling.

142. The device according to claim 141, wherein the first signaling includes a first indication information field, and the first indication information field is used to carry the first indication information;
the device is further used to:
transmit, through a first mode, a position of the first indication information field in the first signaling, to the UE;
wherein the first mode includes at least one of the following:
configuration in high layer signaling;
indication in broadcast signaling;
indication in downlink signaling.

143. The device according to claim 142, wherein when the first signaling belongs to group common signaling, the first indication information field includes at least one of the following: a common information field of at least one UE and a UE-specific information field.

144. The device according to claim 1433, wherein the common information field of the at least one UE carries at least one of the following:
indication information for activating the cell target transmission;
indication information for deactivating the cell target transmission;
available time information of the cell target transmission;
starting time indication information of an active period of the cell target transmission;
end time indication information of an active period of the cell target transmission;
starting time indication information of an inactive period of the cell target transmission;
end time indication information of an inactive period of the cell target transmission;
usage indication information of a UE-specific information field.

145. The device according to claim 143, wherein the UE-specific information field carries at least one of the following:
indication information for activating the cell target transmission;
indication information for deactivating the cell target transmission;
cell information corresponding to an activated cell target transmission;
cell information corresponding to a deactivated cell target transmission;
available time information of the cell target transmission;
indication information related to configuration of the cell target transmission;
update information related to configuration of the cell target transmission;
information related to feedback information of the first indication information;
parameter information corresponding to configuration of the cell target transmission.

146. The device according to any one of claims 138 to 145, wherein the device further includes:
an indication unit used to indicate, through a fifth mode, to the UE, a first resource for transmitting the first signaling;
wherein the fifth mode includes at least one of the following:
pre-configuration, indication in downlink signaling.

147. The device according to claim 146, wherein when the fifth mode includes pre-configuration, the first resource is pre-configured on a first receiving cell;
where the first receiving cell includes at least one of the following:
a primary cell;
a secondary cell.

148. The device according to claim 146, wherein when the fifth mode includes pre-configuration, the first resource satisfies at least one of the following:
having an association relationship with a target reference signal; having an association relationship with a target data transmission channel; having an association relationship with a target control channel.

149. The device according to claim 146, wherein when the fifth mode includes indication in downlink signaling, the downlink signaling is used to indicate one or more of a plurality of resource parameter configurations configured by the network device.

150. The device according to claim 137, wherein the first target cell includes at least one of the following:
a primary Cell;
at least one target secondary cell;
at least one cell in at least one target cell group.

151. The device according to claim 150, wherein the target cell group includes at least one of the following:
a cell group corresponding to a first DRX group of the UE;
a cell group corresponding to a second DRX group of the UE;
a cell group corresponding to the cell target transmission;
a cell group corresponding to network energy saving;
dormant cell group.

152. The device according to claim 151, wherein the device further includes:
a third transmission unit used to transmit the first target cell to the UE through a sixth mode;
wherein the sixth mode includes at least one of the following:
pre-configuration;
indicating through first indication information.

153. The device according to any one of claims 137 to 152, wherein the device further includes:
a second receiving unit used to receive feedback information of the first indication information transmitted by the UE.

154. The device according to claim 153, wherein the feedback information includes at least one of the following:
hybrid automatic repeat request acknowledgement (HARQ-ACK) feedback information;
MAC layer reception confirmation information.

155. The device according to claim 253, wherein the device further includes at least one of the following:
a second indication unit used to indicate, through configuration in high layer signaling, to the UE, a second resource for transmitting feedback information;
a third indication unit used to indicate, through indication in downlink signaling, to the UE, a second resource for feedback information.

156. A processor-readable storage medium, comprising a computer program stored thereon; wherein the computer program is used to cause a processor to execute the method according to any one of claims 1 to 73.
